(19)

Europäisches
Patentamt
European
Patent Office
Office européen
des brevets

(11) **EP 2 257 034 B1**

(12) **EUROPEAN PATENT SPECIFICATION**

(45) Date of publication and mention
of the grant of the patent:
**03.10.2012 Bulletin 2012/40**

(51) Int Cl.:
*H04M 1/24* *(2006.01)*    *G10L 19/00* *(2006.01)*
*G10L 15/26* *(2006.01)*

(21) Application number: **10161260.4**

(22) Date of filing: **28.04.2010**

(54) **Measuring double talk performance**

Messung der Doppelsprechleistung

Mesure de la performance double parole

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **29.04.2009 US 432337**

(43) Date of publication of application:
**01.12.2010 Bulletin 2010/48**

(73) Proprietor: **QNX Software Systems Limited
Kanata, Ontario K2K 0B3 (CA)**

(72) Inventors:
• **Paranjpe, Shreyas**
**Vancouver British Columbia V6S 1L5 (CA)**
• **Fallat, Mark**
**Vancouver British Columbia V6B 3L4 (CA)**

(74) Representative: **Roberts, Gwilym Vaughan et al
Kilburn & Strode LLP
20 Red Lion Street
London WC1R 4PJ (GB)**

(56) References cited:
**EP-A1- 1 883 213    WO-A1-2007/035140
US-A1- 2004 059 572**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

**1. Technical Field.**

This disclosure relates to evaluating communication systems, and more particularly, to systems that evaluate hands free communication systems.

**2. Related Art.**

Some evaluation methods do not consider subjective quality. These evaluations may rate hands free systems as deficient, even though the systems may achieve subjectively good perceived quality.

Conversely, hands free systems that obtain high ratings on certain objective measures may not provide a high perceptible quality. Because objective measures may not necessarily correspond to subjective quality, it may be best for listeners to evaluate systems subjectively by listening to actual speech signals.

Some double talk measures use artificial speech signals to model real speech. The artificial speech may simulate conversations that include double talk. Hands free system features, such as switching characteristics, may be evaluated by measuring switching times or variations in attenuation levels. Slow switching times or large variations in attenuation level may lead to "temporally clipped" output. The initial or final consonants of these sound segments may not be transmitted. Some evaluations that measure switching times and attenuation ranges, may not measure the subjective perceptual quality of these systems.

European patent application pub. no. EP 1883213 discloses a method for calibrating a hands free system, the hands free system comprising a hands free unit and a mobile phone.

US patent application pub. no. US 2004/0059572 discloses a system and a method for quantitively measuring voice transmission quality within a voice-over-data-network which uses speech recognition to measure the quality of voice transmission.

International patent application pub. no. WO 2007/035140 discloses a method for measuring speech intelligibility in a mobile communication network component handling two-way communication.

**SUMMARY**

A system evaluates a hands free communication system. The system automatically selects a consonant-vowel-consonant (CVC), vowel-consonant-vowel (VCV), or other combination of sounds from an intelligent database. The selection is transmitted with another communication stream that temporally overlaps the selection. The quality of the communication system is evaluated through an automatic speech recognition engine. The evaluation occurs at a location remote from the transmitted selection.

Other systems, methods, features, and advantages will be, or will become, apparent to one with skill in the art upon examination of the following figures and detailed description. It is intended that all such additional systems, methods, features, and advantages be included within this description, be within the scope of the invention, and be protected by the following claims.

The invention is as set out in the appended claims, with optional features defined in the dependent claims.

**BRIEF DESCRIPTION OF THE DRAWINGS**

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.

Figure 1 is a hands free communication evaluation system.

Figure 2 is an exemplary double talk evaluation word flow.

Figure 3 is an alternative hands free communication evaluation system.

Figure 4 is an alternative hands free communication evaluation system.

Figure 5 is a voice activity detector in communication with a database management system.

Figure 6 is exemplary voice activity detection.

Figure 7 is a visual positioning of a speech segment to generate a double talk occurrence.

Figure 8 is a data analysis controller interfacing exemplary database machines, and automatic speech recognition engine and an interface.

Figure 9 is an exemplary visual output of an automatic speech recognition engine.

Figure 10 is an alternative hands free communication evaluation system.

Figure 11 is an alternative hands free communication evaluation system.

Figure 12 is a block diagram of a speech end-pointing system.

Figure 13 is a partial illustration of a speech end-pointing system incorporated into a vehicle.

Figure 14 is a speech end-pointer-process.

Figure 15 is a more detailed flowchart of a portion of Figure 14.

Figure 16 is an end-pointing of simulated speech.

Figure 17 is an end-pointing of simulated speech.

Figure 18 is an end-pointing of simulated speech.

Figure 19 is an end-pointing of simulated speech.

Figure 20 is an end-pointing of simulated speech.

Figure 21 is a portion of a dynamic speech end-pointing process.

Figure 22 is a partial block diagram of a consonant detector.

Figure 23 is a partial block diagram of a consonant detector.

Figure 24 is a process that adjusts voice thresholds.

Figure 25 are spectrograms of a voiced segment.

Figure 26 is a spectrogram of a voiced segment.

Figure 27 is a spectrogram of a voiced segment.

Figure 28 are spectrograms of a voiced segment positioned above an output of a consonant detector.

Figure 29 are spectrograms of a voiced segment positioned above an end-point interval.

Figure 30 are spectrograms of a voiced segment positioned above an end-point interval enclosing an output of the consonant detector.

Figure 31 are spectrograms of a voiced segment positioned above an end-point interval.

Figure 32 are spectrograms of a voiced segment positioned above an end-point interval enclosing an output of the consonant detector.

Figure 33 is a partial block diagram of a speech enhancement system.

Figure 34 is a block diagram of a noise detector.

Figure 35 is an alternative speech enhancement system.

Figure 36 is another alternative of speech enhancement system.

Figure 37 is another alternative of speech enhancement system.

Figure 38 is a flow diagram of a speech enhancement method.

Figure 39 is a block diagram of a speech enhancement system within a vehicle.

Figure 40 is a block diagram of a speech enhancement system in communication with a network.

Figure 41 is a block diagram of a speech enhancement system in communication with an audio system and/or a navigation system and/or a communication system.

## DETAILED DESCRIPTION OF THE PREFERRED EMBODIMENTS

The goal of many hands free communication systems is to allow users to experience transparent communication. A high quality system may support intelligible and comprehensible conversation that requires little effort to hear and understand speech, and allows participants to interact easily. A feature that facilitates interaction and may affect a user's subjective assessment is a hands free system's "duplex capability." A fully duplex system may allow participants to interact with each other. It allows parties to talk and/or hear the other sides' speech and/or noise without noticeable attenuation. "Double talk" may occur when parties speak simultaneously. A highly interactive hands free system ensures that the transmitted speech has few audible gaps, missing or incomplete phonemes, syllables, or words.

When evaluating a hands free communication system as part of a developmental process or a selection between competing systems, for example, it may be important to have a reliable, repeatable, and relevant system that may determine a system's subjective perceptual and non-perceptual quality. To reduce testing and evaluation costs, some systems may be automated and require minimal or no human intervention.

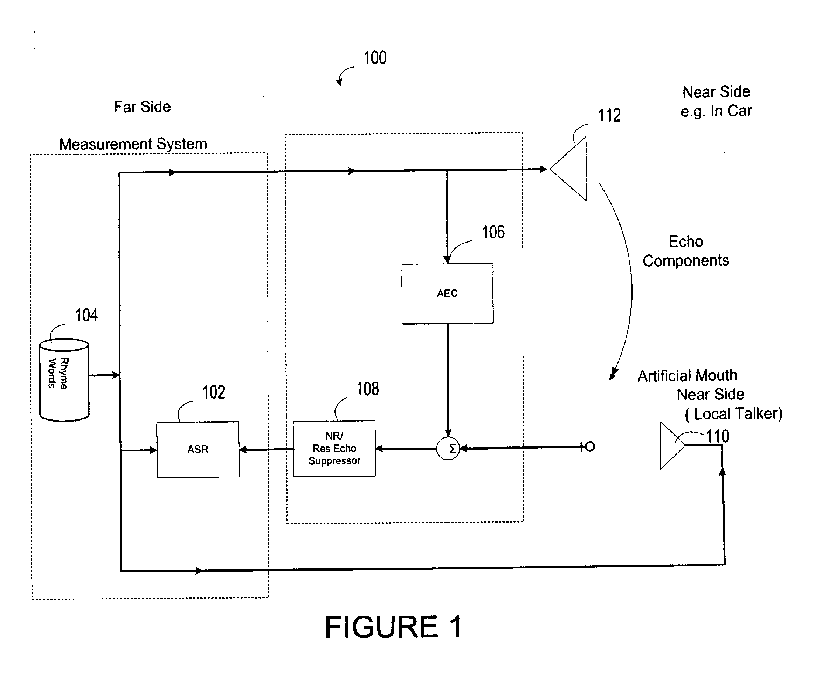

Figure 1 is a system 100 that may account for evaluating subjectively perceived quality in a repeatable and automated manner through an Automatic Speech Recognition (ASR) device (or engine) 102. The ASR device 102 may (receive or) listen to and evaluate transmitted signals that may be accessed from a remote or distributed memory (e.g., such as a database 104 or a local or distributed database management system). The ASR device 102 may function as a proxy for a human listener. It may improve measurements that more closely evaluate the subjective perceived quality of a hands free or wireless communication system. The systems may include an acoustic echo cancellation controller 106, and separate or unitary noise reduction suppressors and/or residual echo suppressors 108.

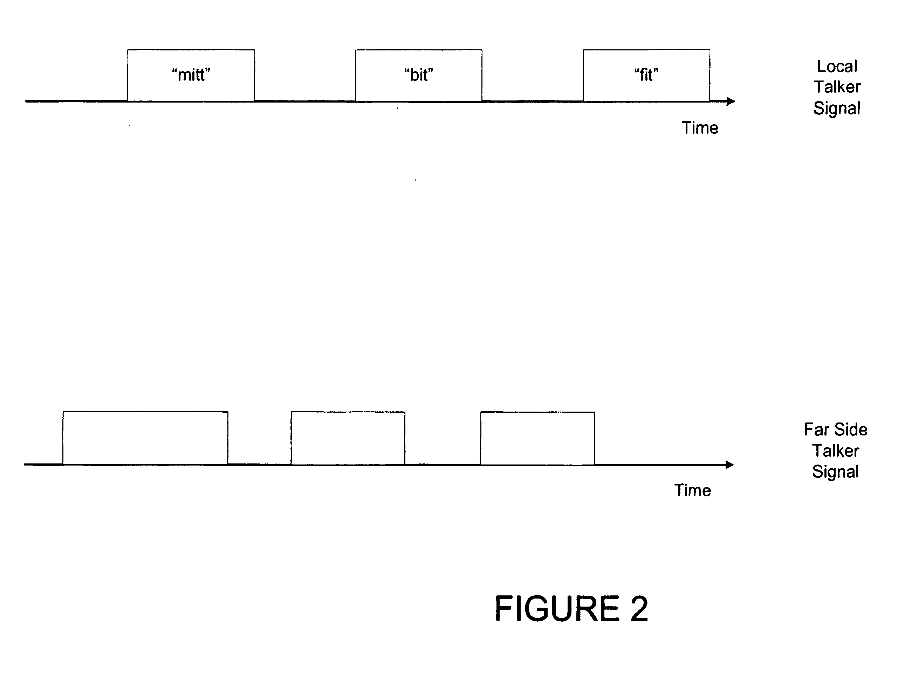

Figure 2 shows an exemplary double talk test word flows. The test may analyze a hands free system and evaluate whether a local talker's speech may be transmitted without any noticeable attenuation. The local talker's speech signal may comprise words from a diagnostic rhyme test (DRT) and/or diagnostic alliteration test (DALT) that may be retained in a local or remote intelligent database. The DRT/DALT words may comprise recorded or synthesized monosyllabic (English) words that may include consonant-vowel-consonant sound combinations, such as "mitt", "bit", "hit", and "fit".

As the stream of DRT/DALT words are articulated or transmitted through a local talker's near side through one or more devices that convert electric signals into audible sound 110, another stream of partially (or temporally) overlapping words may be articulated or transmitted through the far side talker's channel through a separate device or group of devices that convert electric signals to audible sound 112. A loudspeaker signal (which may comprise the far side talker's speech) may include an echo component that may be substantially attenuated or dampened later by the system or process such that it does not perceptually affect the local talker's speech.

During segments when only the far side talker's speech is active, the transmitted signal may be substantially attenuated or dampened because only an echo may be present. However, when the local talker's speech is active and temporally overlaps the far side talker's speech (e.g., a double talk event) the hands free system may transmit the local talker's near side speech. The local talker's near side speech may be clear and intelligible to the far side person. In some applications, the speech may not be substantially attenuated and may not have any noticeably missing components.

In some evaluations, some low quality hands free system react slowly and attenuate the initial consonant of each word, which might then be recognized by the ASR device 102 as "it" "it" "it" "it." On the other hand, some high quality systems may transmit the signal such that it is correctly recognized as "mitt," "bit," "hit," and/or "fit."

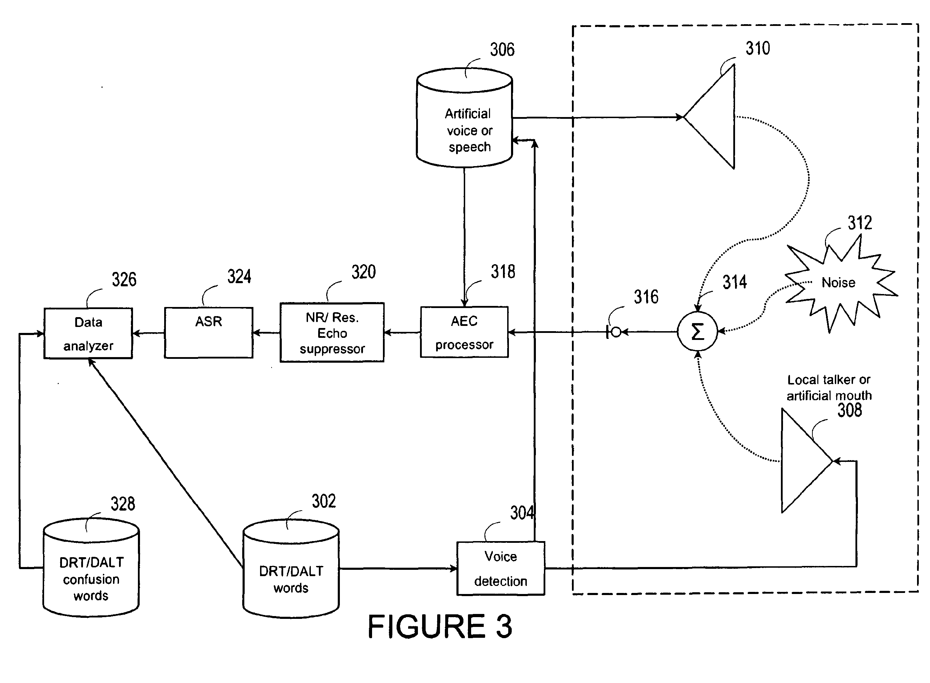

Figure 3 is an alternative evaluation system that may evaluate the intelligibility (and in some systems comprehensibility). Intelligibility may refer to the ability to detect individual speech. Comprehensibility may refer to the ability to understand speech. To evaluate the perceptual aspect of speech intelligibility, a database server or database management system 302 may execute database tasks by selecting monosyllable word pairs that may comprise a diagnostic rhyme test (DRT) and/or diagnostic alliteration test (DALT). The word pairs may differ in their initial or their final consonants, and in some exemplary systems comprise 96 rhyming and 96 non-rhyming monosyllable word pairs. The word selections may be refined by the word pair attributes that may include or represent voicing (e.g., veal-feel), nasality (e.g., need-deed), sustentation (e.g., vee-bee), sibilation (e.g., cheap-keep), graveness (e.g., weed-reed), and compactness (e.g., yen-wren), for example. The selections may be retained in a distributed database management system in which the component partition are distributed over various nodes (or stations) of the network that retains data that represent the physical and tangible frequencies that represent speech. In an alternative system, the component partitions (e.g., a logically distinct portion of memory or a storage device that functions as though it were a physically separate unit) or memory and memory allocations may be retained at a common node (or station). The distributed database architecture may be customized to reflect the specific updates and retrieval traffic of the evaluation system.

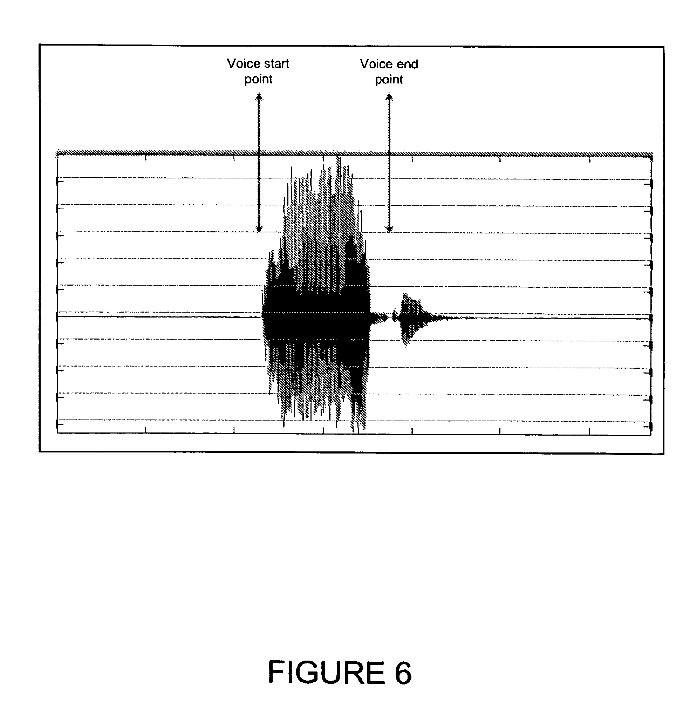

A speech detector or voice activity detector 304 may determine or measure when a frame of a captured or stored signal retained in an audio database server or audio database management system 306 representing a voiced and/or unvoiced artificial voice or speech segment may be transmitted. The speech detector or voice activity detector 304 may include a speech recognizer controller that detects and identifies the endpoints of a word selection such as a DRT/DALT (e.g., DRT and/or DLT) selection (e.g., shown in Figure 6).

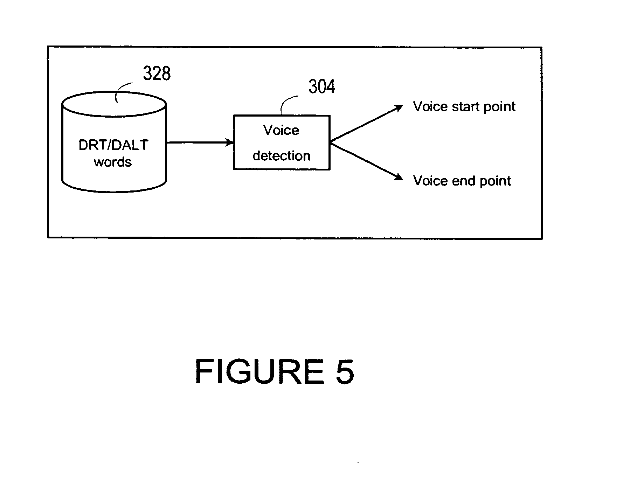

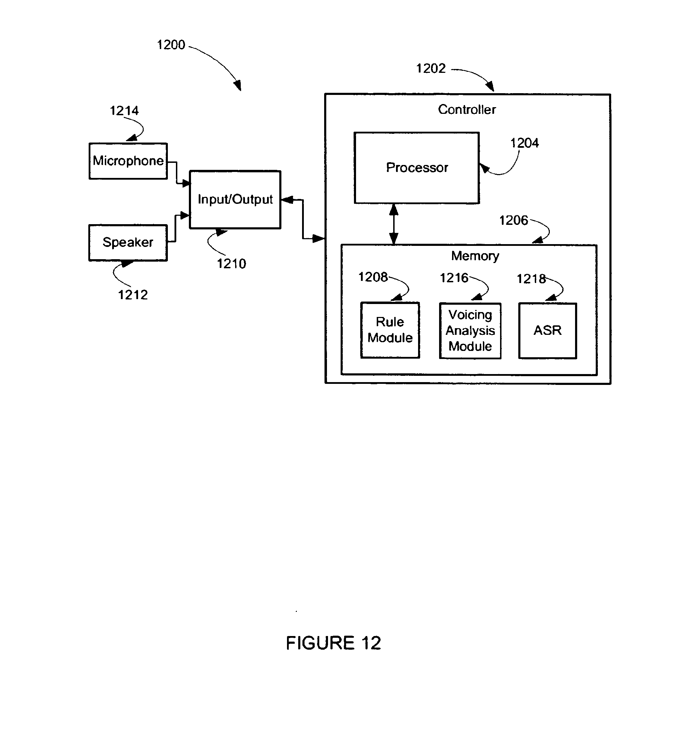

In some systems an energy level detector may measure the endpoints of the selected word pair segment to synchronize the audible transmission of the selected word with the transmission of the selection of an artificial voice segment selected or transmitted from the audio database server or audio database management system 306. The endpoints of a DRT/DALT selection may be identified through a speech threshold comparator or comparison that may be part of, or separate from, the voice activity detector 304 shown in Figure 5. In some systems, speech may be identified when it exceeds a threshold (e.g., some multiple of a mean or standard deviation of the mean of a measured or established noise level). When the signal falls within a predetermined fraction of the threshold, it may be classified as noise. In alternative systems, the speech endpoints may be identified through the systems and/or methods described in Figures 12-32 below.

The sound selected or transmitted by the audio database server or audio database management system 306 may comprise a generated combination of words. The output may comprise a digitized sample of recorded male and/or female speech, may comprise a combination of words formed from a digitized vocabulary, may comprise a synthesis of words from a table of phonemes (retained in a memory or database), or may comprise outputs or combination of outputs of these or separate systems. The output may emulate a near-side speech, which in a vehicle may comprise the speech of the driver or a passenger.

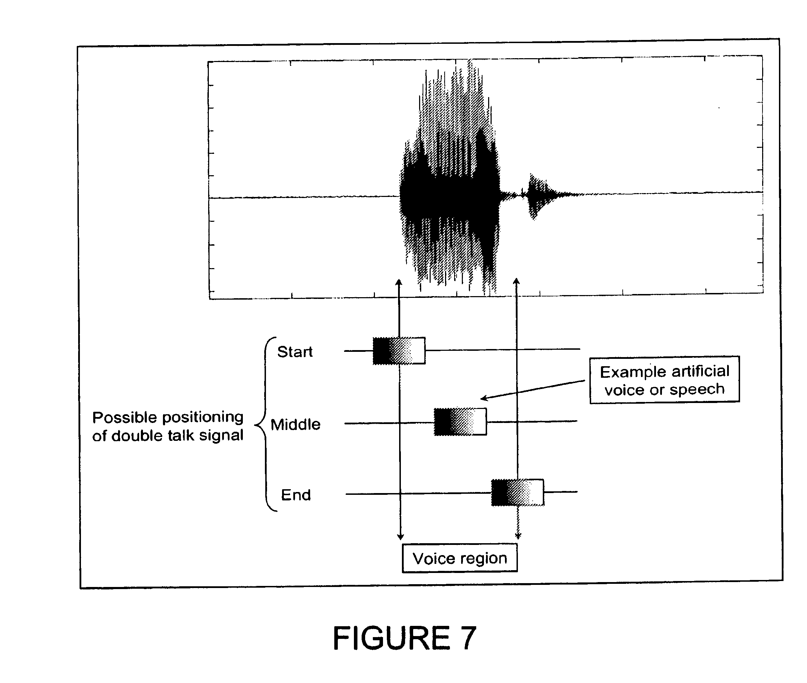

With the endpoints of the DRT/DALT selections identified, loudspeakers or devices (308 and 310) that convert electric signals to audible (e.g., physical) sound transmit the artificial voice or speech and DRT/DALT selections (in response to a synchronizer within or in communication with the speech detector or voice activity detector 304) into an enclosure that may emulate an interior of a vehicle or a stationary interior like a conference room. The synchronizer may interface the server or database management system 302 to compensate for differences between transmission rates between the audio database server or audio database management system 306 and the server or database management system 302. Based on the programming of the audio database server or audio database management system 306 or synchronizer, the artificial voice or speech may be transmitted at substantially the beginning, middle, or end of the DRT/DALT selections as shown in Figure 7. A wideband or narrowband noise synthesizer 312 shown in Figure 3 may generate and transmit periodic and/or non-periodic noise or other external signals that may affect a communication environment. The signals may distort or result in a loss of information within the enclosure. The interference may vary, and in some systems, may emulate the noise that may be heard or expected to be heard within a vehicle, conference room, or other open or closed enclosures.

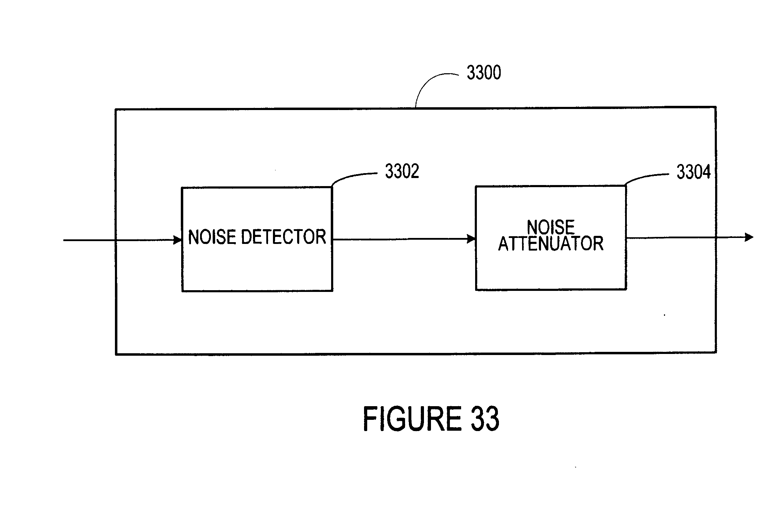

An optional input mixing device 314 may receive and mix the audio (including the noise). The combined speech, echo, noise, etc. may be filtered or limited to a perceptible frequency range (e.g., from about 15 through 20,000 hertz). The input may be converted into electrical signals by an input device such as a microphone. The converted data or composite data may be further processed by optional hardware that output digital data or may be acquired (unconverted) and processed by a processor or a digital signal processor. Optional noise suppression such as an acoustic echo cancellation device or canceller 318, a noise reduction filter and/or residual echo suppression device 320 may selectively pass certain elements of the signal while eliminating or minimizing others elements. Exemplary optional noise suppressions systems may be described in Figures 33-41 below.

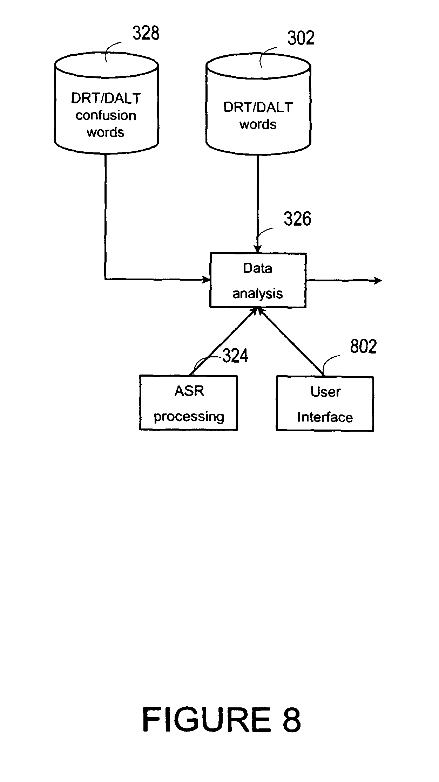

An ASR engine 324 may (receive or) listen, evaluate, and recognize the transmitted signals that may be processed in real-time or accessed from a remote or distributed memory or database machine. The output of the ASR engine 102 may be transmitted through a publicly accessible distributed network (such as the Internet or privately accessible distributed network) to a local or remote data analysis controller 326 that may communicate with a subset of the data or records retained in the database management system 302 (shown as a separate data management system 328) that comprises records or data of confusion words that may not be commonly identified or comprehended by some ASR engines. The local or remote data analysis controller 326 may include a user interface that allows users to enter data or confirm ASR engine selections (as shown in Figure 8). The statistical analysis may render percentage of correct identifications, a measure of standard deviation, a comparison of male and/or female speakers, statistics about word attributes, and other statistical analysis.

To replicate human results, some exemplary ASR engines 304 employ a restrictive grammar set that allows the ASR engines 304 to select one of many (e.g., two words) in the word choices for a given word. The output of the ASR engines 304 may be processed by the local or remote data analysis controller 326 to measure the level of intelligibility based on correct selections.

Some ASR engines 304 may determine if possible confusions exist after processing. In these systems the ASR engine 304 may re-process the data by processing a less restrictive grammar set that may include more common confusion words. For example, if given processed versions of the words "mitt", "bit", "fit" and "hit" a possible confusion word to be added to the grammar may comprise de-concatenated word selections such as the word "it," for this example. The de-concatenations may occur automatically through the ASR engine 304 or may be added through a user interface in communication with the ASR engine 304. By this addition, the system may automatically provide an additional layer of evaluation to a hands free system.

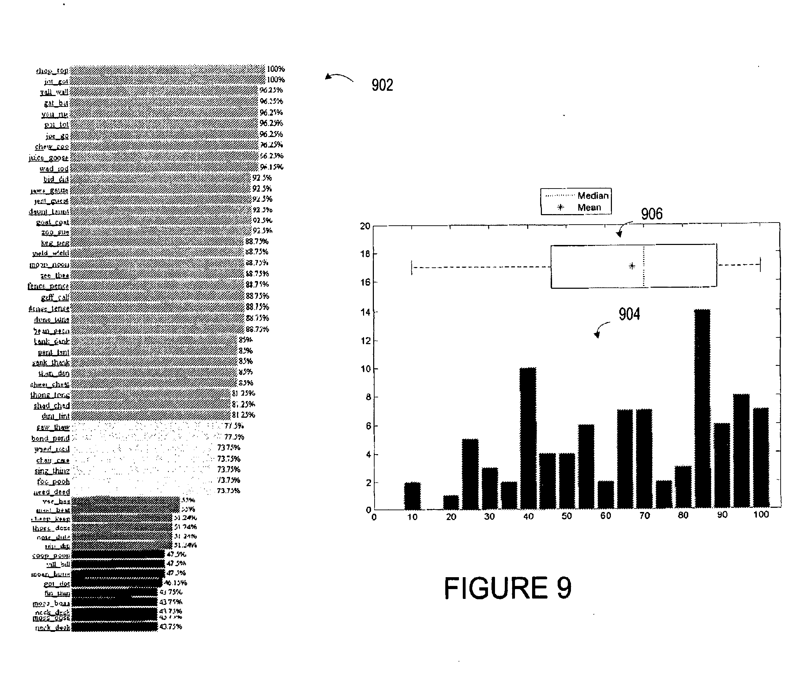

In some systems the local or remote data analysis controller 326 may be organized as an event-driven server, a process driven server, or hybrid server. In an event-driven architecture, the data analysis controller 326 may accept a client request and render the visual graphic that displays the output of the analysis. As an extension of handling a single requests, the data analysis controller 326 may alternate by servicing different requests like the visual graphic of word-pairs and associated identification rates (or percentages) and a second request serving a histogram or distribution of all of the results of the recognized words pairs shown as a histogram 904 and a box-plot of a mean and medium 906 shown in Figure 9 to a remote client. In a process-driven architecture, the data analysis controller 326 or server may devote a separate process to each request. In this configuration, each process executed by the server performs all of the steps to handle a request. In this configuration, the data analysis controller 326 may run multiple processes that enable it to serve multiple requests. In an alternative hybrid configuration, each process may emulate an event driven server that alternates between small collections of requests.

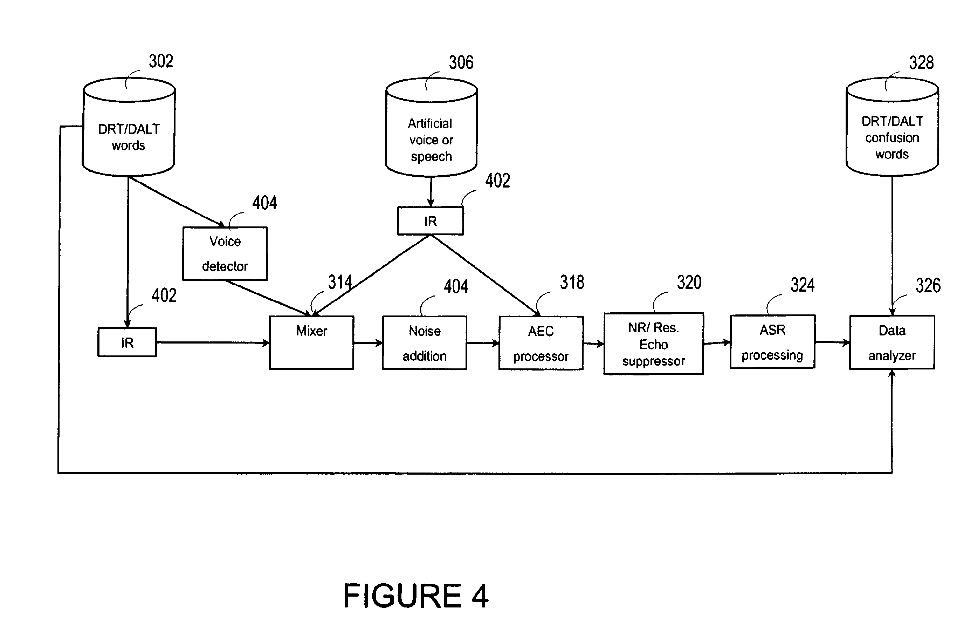

Figure 4 shows another alternative evaluation system that may evaluate the intelligibility (and in some systems comprehensibility) of a hands-free communication system. In Figure 4, convolvers 402 process the output of the database management system 302 and the audio database server or audio database management system 306, respectively. The convolvers map the respective input signals to reflect the frequencies of an impulse response. In some systems, the impulse response output may represent how sound may react within an enclosure. The physical and tangible affects represented by the data may represent environments like an interior of a vehicle or conference room. In Figure 4 wideband or narrowband noise synthesizer 404 blends the mixer (314) output before the output is possessed by the devices and components described in Figure 3. In alternative systems, the output of the noise synthesizer 404 may comprise an input to the mixing device 314.

The methods and descriptions of Figures 1, 2, and 4 may be encoded in a signal bearing medium, a computer readable medium such as a memory that may comprise unitary or separate logic, programmed within a device such as one or more integrated circuits, or processed by a controller, a computer, or an automated speech recognition system. If the methods are performed by software, the software or logic may reside in a memory resident to or interfaced to one or more processors or controllers, a wireless communication interface, a wireless system, a powertrain controller, an entertainment and/or comfort controller of a vehicle or non-volatile or volatile memory. The memory may retain an ordered listing of executable instructions for implementing logical functions.

An automatic speech recognition machine may evaluate a hands free transmitted signal by measuring perceptually relevant parameters that relate more directly to a listener's subjective perceived quality. The predetermined selection of words and/or sound combinations for recognition may capture this measure. The word and/or combinations may be selected from various intelligibility tests including the Diagnostic Rhyme Test, Diagnostic Alliteration Test, Diagnostic Medial Consonant Test, and Modified Rhyme Test, for example, and/or comprehension tests. The evaluation may allow for double talk testing across the initial, middle, and final consonants of the transmitted words or sound combinations.

In some systems the temporal occurrence of a selected word or combination may be based on the output of a voice activity detector 304. While the voice activity detector of Figures 4 and 5 may monitor words selected from various intelligibility databases in alternative systems, the synchronous transmission and position of a selected word or word combinations (e.g., through the synchronizer) may be based on the detection of the length of the a voiced and/or unvoiced artificial voice or speech segment accessed through audio database server or audio database management system 306. In this system, and in alternatives to each of the systems described above, the artificial voice or speech segment may comprise one, two, three, or more recorded speech samples from male and/or female speakers.

In each of the described systems, a measure of comprehensibility may also be derived. In some applications comprehensibility may be based on a percentage of correct identifications. It may be based on the percentages shown in Figure 9. When shown visually, the visual graphics (e.g., 902) may be color coded to render impression characteristics. Green may indicate a highly acceptable identification (e.g., a range between about 80% - about 100%), yellow may indicate a less acceptable identification (e.g., a range between about 70% to about 79%); red may indicate an unacceptable identification (e.g., a range between about 50% to about 69%).; and black may indicate a failed identification (e.g., a range between about 0% to about 49%). In some systems, some or all of the impression characteristics or other word symbol, or image may be associated with a hyperlink. A hyperlink may be activated through an absolute or relative pointing device. Selection and activation or a hyperlink may act as a navigation element to another section of the display or another document that may render more or different detail.

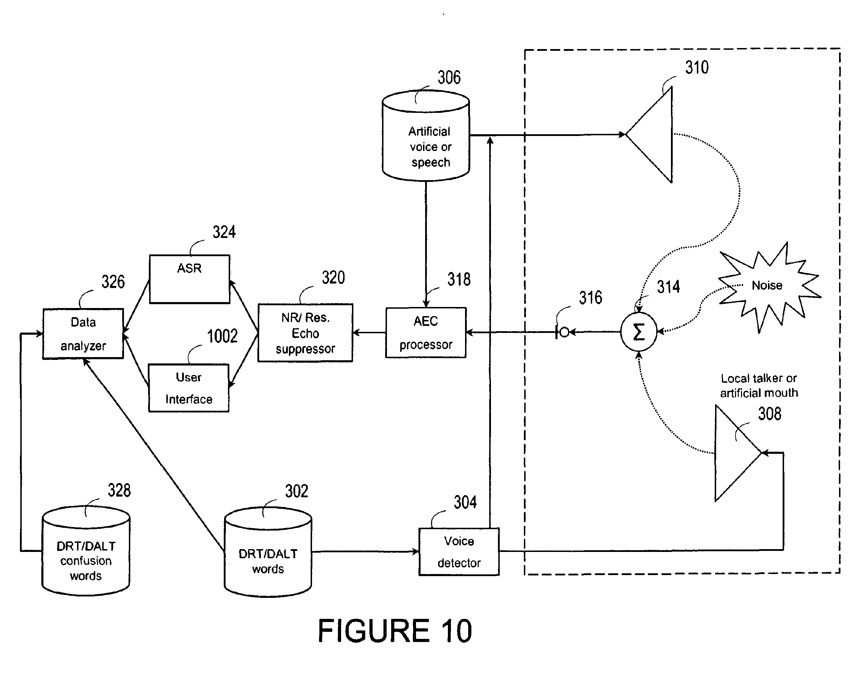

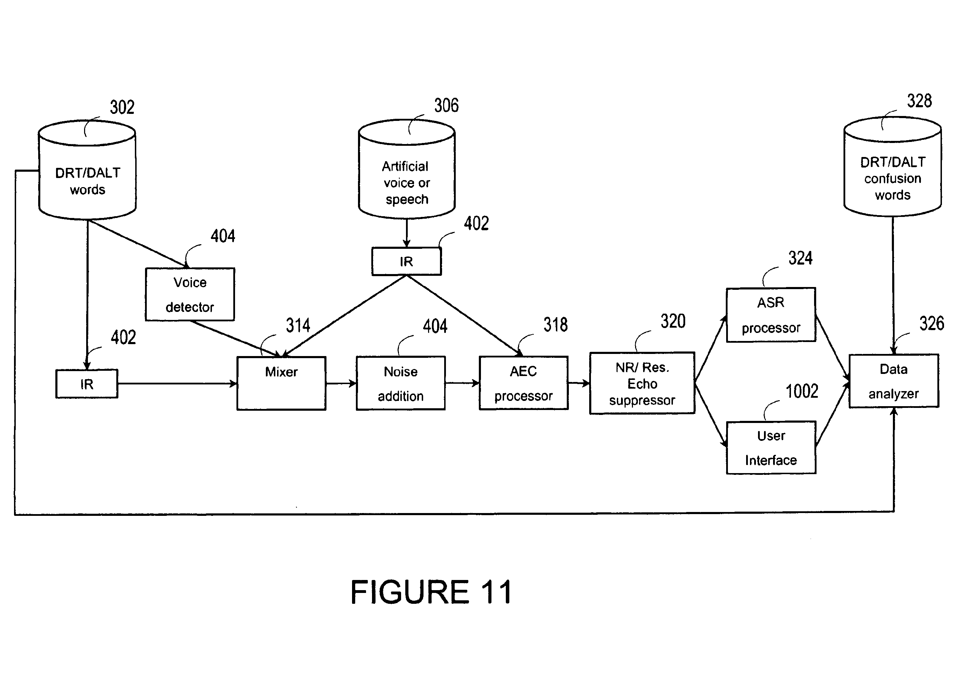

Figures 10 and 11 show other alternative systems. In these systems, evaluations may be supplemented through an interface device 1002 or node. The interface device may support an environment that renders programs, files, and options through icons, menus, and dialog boxes on a local or remote screen (e.g., a graphical user interface). A user may select and activate these options through a relative or absolute pointing device, keyboard selection, or voice recognition detector. The interface may include software routines to handle these elements and report the user's actions (such as a mouse click on a word selection or pointing or highlighting a particular location in text, or a key press, for example). Many applications may call these routines with specific parameters.

An end-pointer determines a beginning and an end of a speech segment. The end-pointer includes a voice triggering module that identifies a portion of an audio stream that has an audio speech segment. A rule module communicates with the voice triggering module. The rule module includes a plurality of rules used to analyze a part of the audio stream to detect a beginning and an end of the audio speech segment. A consonant detector detects occurrences of a high frequency consonant in the portion of the audio stream.

ASR systems are tasked with recognizing spoken commands. These tasks may be facilitated by sending voice segments to an ASR engine. A voice segment may be identified through end-pointing logic. Some end-pointing logic applies rules that identify the duration of consonants and pauses before and/or after a vowel. The rules may monitor a maximum duration of non-voiced energy, a maximum duration of continuous silence before a vowel, a maximum duration of continuous silence after a vowel, a maximum time before a vowel, a maximum time after a vowel, a maximum number of isolated non-voiced energy events before a vowel, and/or a maximum number of isolated non-voiced energy events after a vowel. When a vowel is detected, the end-pointing logic may follow a signal-to-noise (SNR) contour forward and backward in time. The limits of the end-pointing logic may occur when the amplitude reaches a predetermined level which may be zero or near zero. While searching, the logic identifies voiced and unvoiced intervals to be processed by an ASR engine.

Some end-pointers examine one or more characteristics of an audio stream for a triggering characteristic. A triggering characteristic may identify a speech interval that includes voiced or unvoiced segments. Voiced segments may have a near periodic structure in the time-domain like vowels. Non-voiced segments may have a noise-like structure (nonperiodic) in the time domain like a fricative. The end-pointers analyze one or more dynamic aspects of an audio stream. The dynamic aspects may include: (1) characteristics that reflect a speaker's pace (e.g., rate of speech), pitch, etc.; (2) a speaker's expected response (such as a "yes" or "no" response); and/or (3) environmental characteristics, such as a background noise level, echo, etc.

Figure 12 is a block diagram of a speech end-pointing system. The end-pointing system 1200 encompasses hardware and/or software running on one or more processors on top of one or more operating systems. The end-pointing system 1200 includes a controller 1202 and a processor 1204 linked to a remote (not shown) and/or local memory 1206. The processor 1204 accesses the memory 1206 through a unidirectional or a bidirectional bus. The memory 1206 may be partitioned to store a portion of an input audio stream, a rule module 1208, and support files that detect the beginning and/or end of an audio segment, and a voicing analysis module 1216. When read by the processor 1204, the voicing analysis module 1216 may detect a triggering characteristic that identifies a speech interval. When integrated within or when a unitary part of controller serving an ASR engine, the speech interval may be processed when the ASR code 118 is read by the processor 1204.

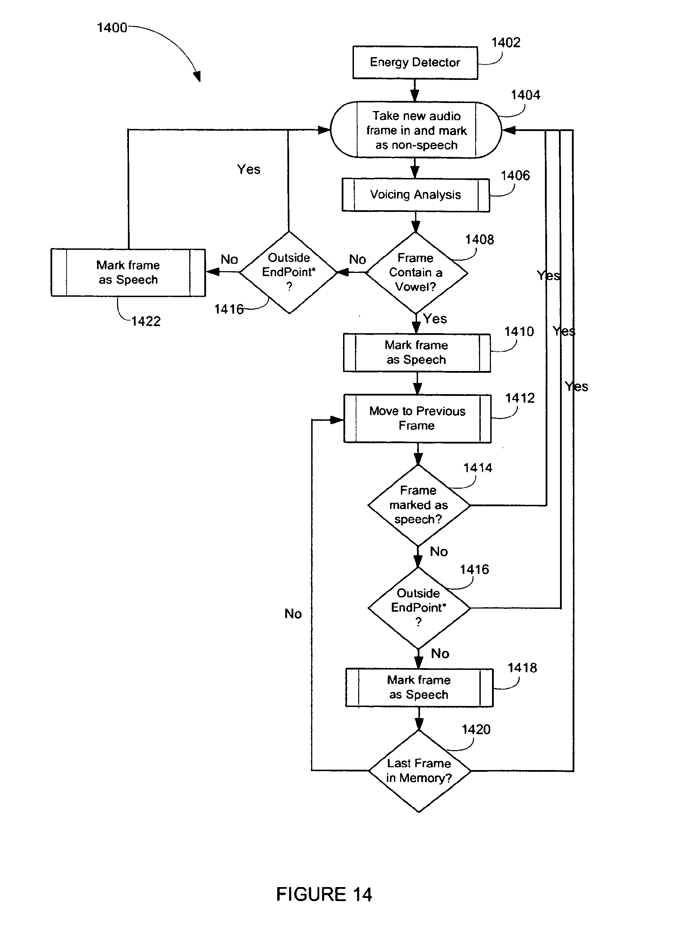

The local or remote memory 1206 may buffer audio data received before or during an end-pointing process. The processor 1204 may communicate through an input/output (I/O) interface 1210 that receives input from devices that convert sound waves into electrical, optical, or operational signals 1214. The I/O 1210 may transmit these signals to devices 1212 that convert signals into sound. The controller 1202 and/or processor 1204 may execute the software or code that implements each of the processes described herein including those described in Figures 14, 15, 21, and 24.

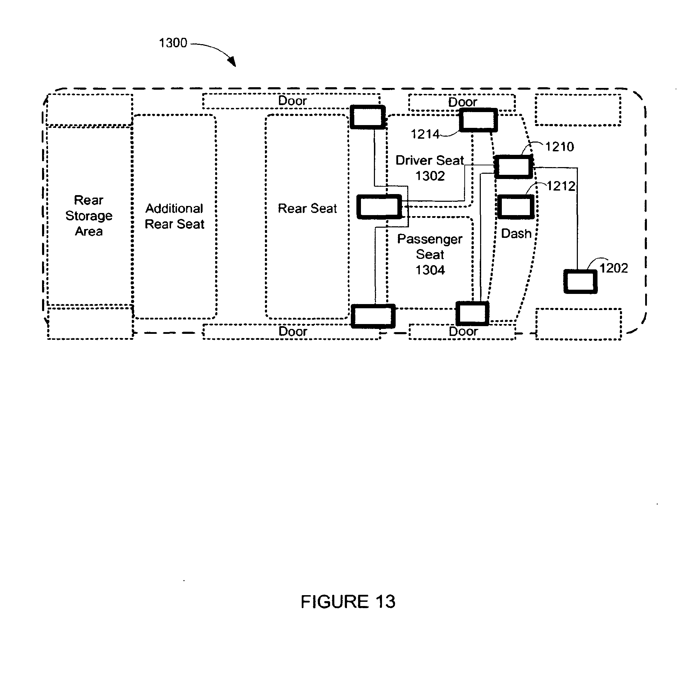

Figure 13 illustrates an end-pointer system 1200 within a vehicle 1300. The controller 1202 may be programmed within or linked to a vehicle on-board computer, such as an electronic control unit, an electronic control module, and/or a body control module. Some systems may be located remote from the vehicle. Each system may communicate with vehicle logic through one or more serial or parallel buses or wireless protocols. The protocols may include one or more J1850VPW, J1850PWM, ISO, ISO9141-2, ISO14230, CAN, High Speed CAN, MOST, LIN, IDB-1394, IDB-C, D2B, Bluetooth, TTCAN, TTP, or other protocols such as a protocol marketed under the trademark FlexRay.

Figure 14 is a flowchart of a speech end-pointer process. The process operates by dividing an input audio stream into discrete segments or packages of information, such as frames. The input audio stream may be analyzed on a frame-by-frame basis. In some systems, the fixed or variable length frames may be comprised of about 10 ms to about 100 ms of audio input. The system may buffer a predetermined amount of data, such as about 350 ms to about 500 ms audio input data, before processing is carried out. An energy detector 1402 (or process) may be used to detect voiced and unvoiced sound. Some energy detectors and processes compare the amount of energy in a frame to a noise estimate. The noise estimate may be constant or may vary dynamically. The difference in decibels (dB), or ratio in power, may be an instantaneous signal to noise ratio (SNR).

Initially, the process designates some or all of the initial frames as not speech 1404. When energy is detected, voicing analysis of the current frame or, designated $frame_n$ occurs at 1406. The voicing analysis monitors triggering characteristics that may be present in $frame_n$. The voicing analysis may detect higher frequency consonants such as an "s" or "x" in a $frame_n$. Alternatively, the voicing analysis may detect vowels. To further explain the process, a vowel triggering characteristic is further described.

Voicing analysis detects vowels in frames in Figure 14. A process may identify vowels through a pitch estimator. The pitch estimator may look for a periodic signal in a frame to identify a vowel. Alternatively, the pitch estimator may look for a predetermined threshold at a predetermined frequency to identify vowels.

When the voicing analysis detects a vowel in $frame_n$, the $frame_n$ is marked as speech at 1410. The system then processes one or more previous frames. A previous frame may be an immediate preceding frame, $frame_{n-1}$ at 1412. The system may determine whether the previous frame was previously marked as speech at 1414. If the previous frame was marked as speech (*e.g.*, answer of "Yes" to block 1414), the system analyzes a new audio frame at 1404. If the previous frame was not marked as speech (*e.g.*, answer of "No" to 1414), the process applies one or more rules to determine whether the frame should be marked as speech.

Block 1416 designates decision block "Outside EndPoint" that applies one or more rules to determine when the frame should be marked as speech. The rules may be applied to any part of the audio segment, such as a frame or a group of frames. The rules may determine whether the current frame or frames contain speech. If speech is detected, the frame is designated within an end-point. If not, the frame is designated outside of the endpoint.

If a $frame_{n-1}$ is outside of the end-point (*e.g.,* no speech is present), a new audio frame, $frame_{n+1}$, may be processed. It may be initially designated as non-speech, at block 1404. If the decision at 1416 indicates that $frame_{n-1}$ is within the end-point (*e.g.*, speech is present), then $frame_{n-1}$ is designated or marked as speech at 1418. The previous audio stream is then analyzed, until the last frame is read from a local or remote memory at 1420.

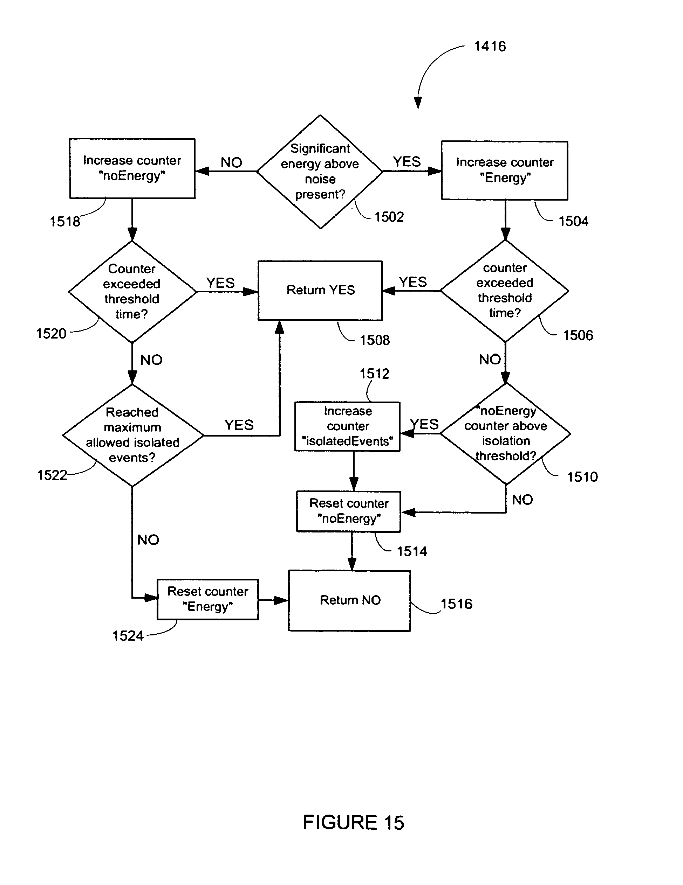

Figure 15 is an exemplary detailed process of 1416. Act 1416 may apply one or more rules. The rules relate to aspects that may identify the presence and/or absence of speech. In Figure 15, the rules detect verbal segments by identifying a beginning and/or an endpoint of a spoken utterance. Some rules are based on analyzing an event (*e.g.* voiced energy, un-voiced energy, an absence/presence of silence, etc.). Other rules are based on a combination of events (*e.g.* un-voiced energy followed by silence followed by voiced energy, voiced energy followed by silence followed by unvoiced energy, silence followed by un-voiced energy followed by silence, etc.).

The rules may examine transitions into energy events from periods of silence or from periods of silence into energy events. A rule may analyze the number of transitions before a vowel is detected; another rule may determine that speech may include no more than one transition between an unvoiced event or silence and a vowel. Some rules may analyze the number of transitions after a vowel is detected with a rule that speech may include no more than two transitions from an unvoiced event or silence after a vowel is detected.

One or more rules may be based on the occurrence of one or multiple events (*e.g.* voiced energy, un-voiced energy, an absence/presence of silence, etc.). A rule may analyze the time preceding an event. Some rules may be triggered by the lapse of time before a vowel is detected. A rule may expect a vowel to occur within a variable range such as about a 300 ms to 400 ms interval or a rule may expect a vowel to be detected within a predetermined time period (e.g., about 350 ms in some processes). Some rules determine a portion of speech intervals based on the time following an event. When a vowel is detected a rule may extend a speech interval by a fixed or variable length. In some processes the time period may comprise a range (e.g., about 400 ms to 800 ms in some processes) or a predetermined time limit (e.g., about 600 ms in some processes).

Some rules may examine the duration of an event. The rules may examine the duration of a detected energy (e.g., voiced or unvoiced) or the lack of energy. A rule may analyze the duration of continuous unvoiced energy. A rule may establish that continuous unvoiced energy may occur within a variable range (e.g., about 150 ms to about 300 ms in some processes), or may occur within a predetermined limit (e.g., about 200 ms in some processes). A rule may analyze the duration of continuous silence before a vowel is detected. A rule may establish that speech may include a period of continuous silence before a vowel is detected within a variable range (e.g., about 50 ms to about 80 ms in some processes) or at a predetermined limit (e.g., about 70 ms in some processes). A rule may analyze the time duration of continuous silence after a vowel is detected. Such a rule may establish that speech may include a duration of continuous silence after a vowel is detected within a variable range (e.g., about 200 ms to about 300 ms in some processes) or a rule may establish that silence occurs across a predetermined time limit (e.g., about 250 ms in some processes).

At 1502, the process determines if a frame or group of frames has an energy level above a background noise level. A frame or group of frames having more energy than a background noise level may be analyzed based on its duration or its relationship to an event. If the frame or group of frames does not have more energy than a background noise level, then the frame or group of frames may be analyzed based on its duration or relationship to one or more events. In some systems the events may comprise a transition into energy events from periods of silence or a transition from periods of silence into energy events.

When energy is present in the frame or a group of frames, an "energy" counter is incremented at block 1504. The "energy" counter tracks time intervals. It may be incremented by a frame length. If the frame size is about 32 ms, then block 404 may increment the "energy" counter by about 32 ms. At 406, the "energy" counter is compared to a threshold. The threshold may correspond to the continuous unvoiced energy rule which may be used to determine the presence and/or absence of speech. If decision 1506 determines that the threshold was exceeded, then the frame or group of frames are designated outside the end-point (*e.g.* no speech is present) at 1508 at which point the system jumps back to 1404 of Figure 14. In some alternative processes multiple thresholds may be evaluated at 1506.

If the time threshold is not exceeded by the "energy" counter at 1506, then the process determines if the "noenergy" counter exceeds an isolation threshold at 1510. The "noenergy" counter 1518 may track time and is incremented by the frame length when a frame or group of frames does not possess energy above a noise level. The isolation threshold may comprise a threshold of time between two plosive events. A plosive relates to a speech sound produced by a closure of the oral cavity and subsequent release accompanied by a burst of air. Plosives may include the sounds /p/ in *pit* or /d/ in *dog.* An isolation threshold may vary within a range (e.g., such as about 10 ms to about 50 ms) or may be a predetermined value such as about 25 ms. If the isolation threshold is exceeded, an isolated unvoiced energy event (e.g., a plosive followed by silence) was identified, and "isolatedevents" counter 1512 is incremented. The "isolatedevents" counter 1512 is incremented in integer values. After incrementing the "isolatedevents" counter 1512, "noenergy" counter 1518 is reset at block 1514. The "isolatedevents" counter may be reset due to the energy found within the frame or group of frames analyzed. If the "noenergy" counter 1518 does not exceed the isolation threshold, the "noenergy" counter 1518 is reset at block 1514 without incrementing the "isolatedevents" counter 1512. The "noenergy" counter 1518 is reset because energy was found within the frame or group of frames analyzed. When the "noenergy" counter 1518 is reset, the outside end-point analysis designates the frame or group of frames analyzed within the end-point (*e.g.* speech is present) by returning a "NO" value at 1516. As a result, the system marks the analyzed frame(s) as speech at 1418 or 1422 of Figure 14.

Alternatively, if the process determines that there is no energy above the noise level at 1502 then the frame or group of frames analyzed contain silence or background noise. In this condition, the "noenergy" counter 1518 is incremented. At 1520, the process determines if the value of the "noenergy" counter exceeds a predetermined time threshold. The predetermined time threshold may correspond to the continuous non-voiced energy rule threshold which may be used to determine the presence and/or absence of speech. At 1520, the process evaluates the duration of continuous silence. If the process determines that the threshold is exceeded by the value of the "noenergy" counter at 1520, then the frame or group of frames are designated outside the end-point (*e.g.* no speech is present) at block 1508. The process then proceeds to 1404 of Figure 14 where a new frame, $\text{frame}_{n+1}$, is received and marked as non-speech. Alternatively, multiple thresholds may be evaluated at 1520.

If no time threshold is exceeded by the value of the "noenergy" counter 1518, then the process determines if the maximum number of allowed isolated events has occurred at 1522. The maximum number of allowed isolated events is a configurable or programmed parameter. If grammar is expected (*e.g.* a "Yes" or a "No" answer) the maximum number of allowed isolated events may be programmed to "tighten" the end-pointer's interval or band. If the maximum number of allowed isolated events is exceeded, then the frame or frames analyzed are designated as being outside the end-point (*e.g.* no speech is present) at block 1508. The system then jumps back to block 304 where a new frame, frame$_{n+1}$, is processed and marked as non-speech.

If the maximum number of allowed isolated events is not reached, "energy" counter 1504 is reset at block 1524. "Energy" counter 1504 may be reset when a frame of no energy is identified. When the "energy" counter 1504 is reset, the outside end-point analysis designates the frame or frames analyzed inside the end-point (*e.g.* speech is present) by returning a "NO" value at block 1516. The process then marks the analyzed frame as speech at 1418 or 1422 of Figure 14.

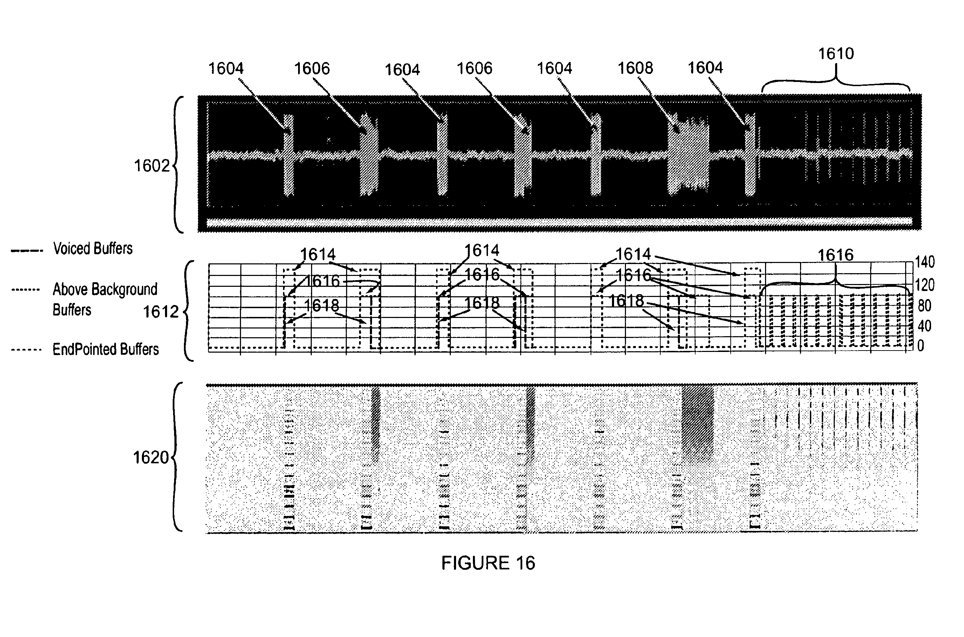

Figures 16-20 show time series of a simulated audio stream, characterization plots of these signals, and spectrographs of the corresponding time series signals. The simulated audio stream 1602 of Figure 16 comprises the spoken utterances "NO" 1604, "YES" 1606, "NO" 1604, "YES" 1606, "NO" 1604, "YESSSSS" 1608, "NO" 1604, and a number of "clicking" sounds 1610. The clicking sounds may represent the sound heard when a vehicle's turn signal is engaged. Block 1612 illustrates various characterization plots for the time series audio stream. Block 1612 displays the number of samples along the x-axis. Plot 1614 is a representation of an end-pointer marking a speech interval. When plot 1614 has little or no amplitude, the end-pointer has not detected a speech segment. When plot 1614 has measurable amplitude the end-pointer detected speech that may be within the bounded interval. Plot 1616 represents the energy detected above a background energy level. Plot 1618 represents a spoken utterance in the time domain. Block 1620 illustrates a spectral representation of the audio stream in block 1602.

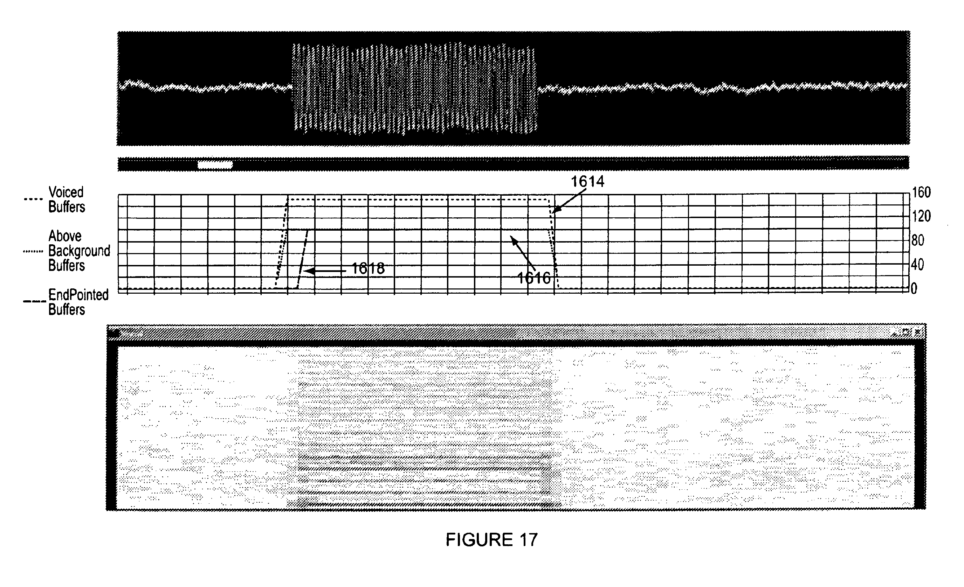

Block 1612 illustrates how the end-pointer may respond to an input audio stream. In Figure 16, end-pointer plot 1614 captures the "NO" 1604 and the "YES" 1606 signals. When the "YESSSSS" 1608 is processed, the end-pointer plot 1614 captures a portion of the trailing "S", but when it reaches a maximum time period after a vowel or a maximum duration of continuous non-voiced energy has been exceeded (by rule) the end-pointer truncates a portion of the signal. The rule-based end-pointer sends the portion of the audio stream that is bound by end-pointer plot 1614 to an ASR engine. In block 1612, and Figures 17-20, the portion of the audio stream sent to an ASR engine may vary with the selected rule.

In Figure 16, the detected "clicks" 1610 have energy. Because no vowel was detected within that interval, the end-pointer does not capture the energy. A pause is declared which is not sent to the ASR engine.

Figure 17 magnifies a portion of an end-pointed "NO" 1604. The lag in the spoken utterance plot 1618 may be caused by time smearing. The magnitude of 1618 reflects period in which energy is detected. The energy of the spoken utterance 1618 is nearly constant. The passband of the end-pointer 1614 begins when speech energy is detected and cuts off by rule. A rule may determine the maximum duration of continuous silence after a vowel or the maximum time following the detection of a vowel. In Figure 17, the audio segment sent to an ASR engine comprises approximately 3150 samples.

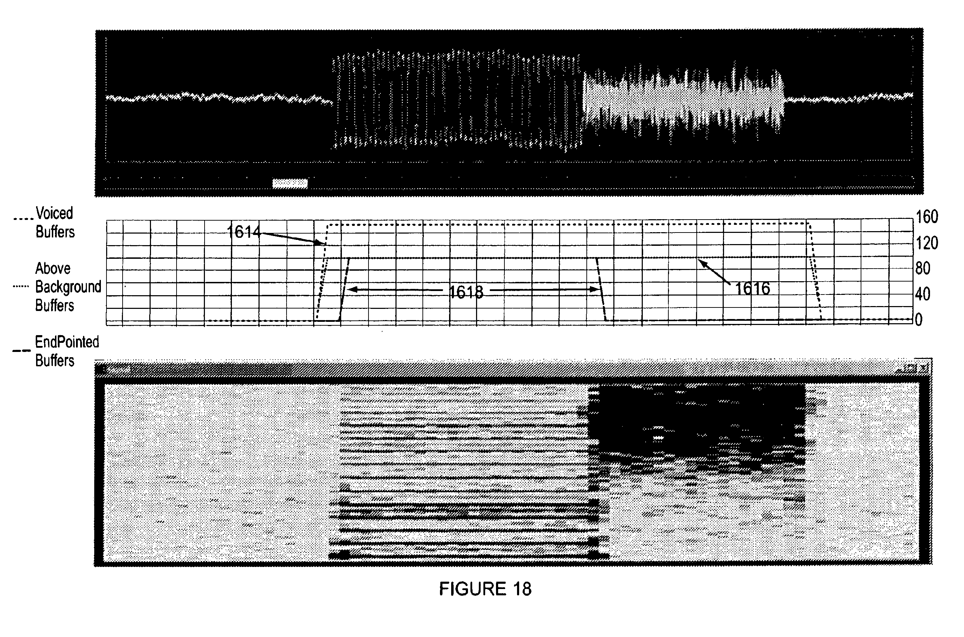

Figure 18 magnifies a portion of an end-pointed "YES" 1606. The lag in the spoken utterance plot 1618 may be caused by time smearing. The passband of the end-pointer 1614 begins when speech energy is detected and continues until the energy falls off from the random noise. The upper limit of the passband may be set by a rule that establishes the maximum duration of continuous non-voiced energy or by a rule that establishes the maximum time after a vowel is detected. In Figure 18, the portion of the audio stream that is sent to an ASR engine comprises approximately 5550 samples.

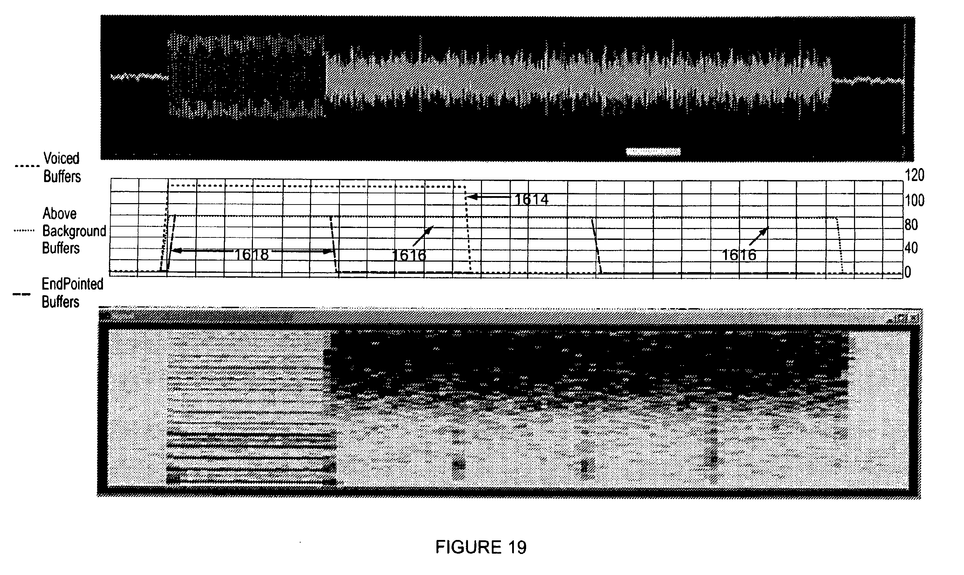

Figure 19 magnifies a portion of one end-pointed "YESSSSS" 1608. The end-pointer accepts the post-vowel energy as a possible consonant for a predetermined period of time. When the period lapses, a maximum duration of continuous non-voiced energy rule or a maximum time after a vowel rule may be applied limiting the data passed to an ASR engine. In Figure 19, the portion of the audio stream that is sent to an ASR engine comprises approximately 5750 samples. Although the spoken utterance continues for an additional 6500 samples, in one system, the end-pointer truncates the sound segment by rule.

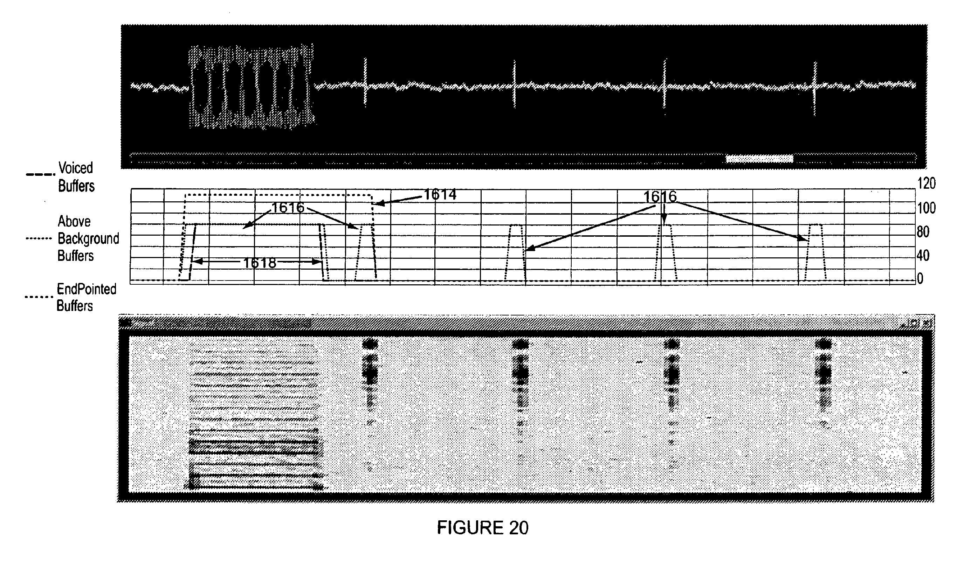

Figure 20 magnifies an end-pointed "NO" 1604 and several "clicks" 1610. In Figure 20, the lag in the spoken utterance plot 1618 may be caused by time smearing. The passband of the end-pointer 1614 begins when speech energy is detected. A click may be included within end-pointer 1614 because the system detected energy above the background noise threshold.

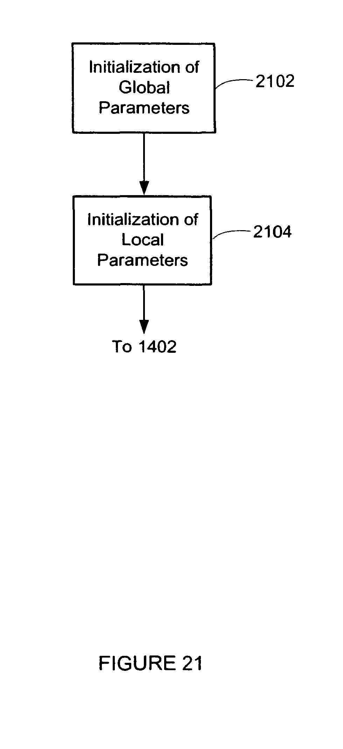

Some end-pointers determine the beginning and/or end of a speech segment by analyzing a dynamic aspect of an audio stream. Figure 21 is a partial process that analyzes the dynamic aspect of an audio segment. An initialization of global aspects occurs at 2102. Global aspects may include selected characteristics of an audio stream such as characteristics that reflect a speaker's pace (e.g., rate of speech), pitch, etc. The initialization at 2104 may be based on a speaker's expected response (such as a "yes" or "no" response); and/or environmental characteristics, such as a background noise level, echo, etc.

The global and local initializations may occur at various times throughout system operation. The background noise estimations (local aspect initialization) may occur during nonspeech intervals or when certain events occur such as when the system is powered up. The pace of a speaker's speech or pitch (global initialization) and monitoring of certain responses (local aspect initialization) may be initialized less frequently. Initialization may occur when an ASR engine communicates to an end-pointer or at other times.

During initialization periods 2102 and 2104, the end-pointer may operate at programmable default thresholds. If a threshold or timer needs to be change, the system may dynamically change the thresholds or timing values. In some systems, thresholds, times, and other variables may be loaded into an end-pointer by reading specific or general user profiles from the system's local memory or a remote memory. These values and settings may also be changed in real-time or near real-time. If the system determines that a user speaks at a fast pace, the duration of certain rules may be changed and retained within the local or remote profiles. If the system uses a training mode, these parameters may also be programmed or set during a training session.

The operation of some dynamic end-pointer processes may have similar functionality to the processes described in Figures 14 and 15. Some dynamic end-pointer processes may include one or more thresholds and/or rules. In some applications the "Outside Endpoint" routine, block 1416 is dynamically configured. If a large background noise is detected, the noise threshold at 1502 may be raised dynamically. This dynamic re-configuration may cause the dynamic end-pointer to reject more transients and non-speech sounds. Any threshold utilized by the dynamic end-pointer may be dynamically configured.

An alternative end-pointer system includes a high frequency consonant detector or s-detector that detects high-frequency consonants. The high frequency consonant detector calculates the likelihood of a high-frequency consonant by comparing a temporally smoothed SNR in a high-frequency band to a SNR in one or more low frequency bands. Some systems select the low frequency bands from a predetermined plurality of lower frequency bands (e.g., two, three, four, five, etc. of the lower frequency bands). The difference between these SNR measurements is converted into a temporally smoothed probability through probability logic that generates a ratio between about zero and one hundred that predicts the likelihood of a consonant.

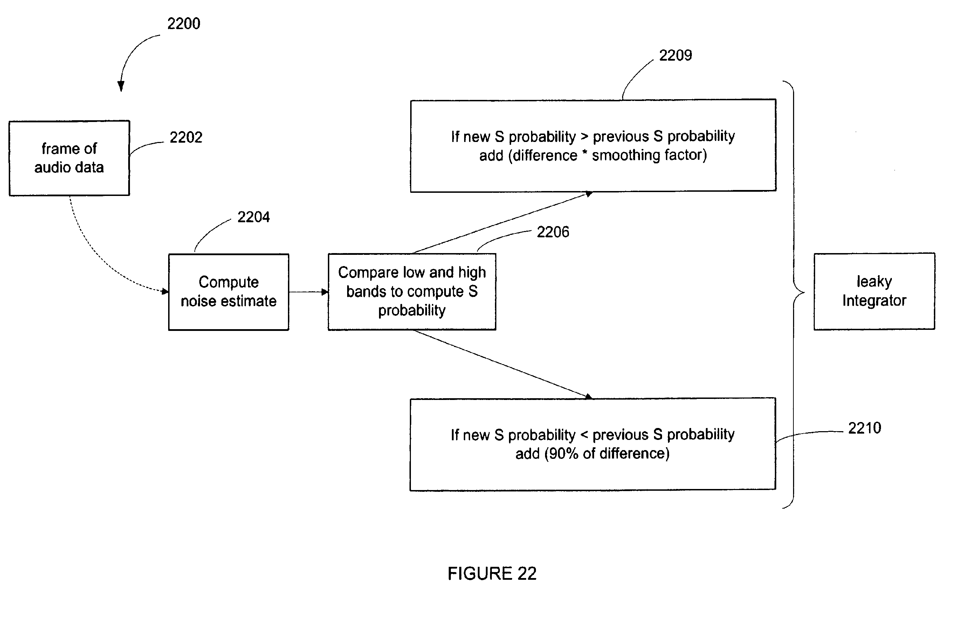

Figure 22 is a diagram of a consonant detector 2200 that may be linked to or may be a unitary part of an end-pointing system. A receiver or microphone captures the sound waves during voice activity. A Fast Fourier Transform (FFT) element or logic converts the time-domain signal into a frequency domain signal that is broken into frames 2202. A filter or noise estimate logic predicts the noise spectrum in each of a plurality of low frequency bands 2204. The energy in each noise estimate is compared to the energy in the high frequency band of interest through a comparator that predicts the likelihood of an /s/ (or unvoiced speech sound such as /f/, /th/, /h/, etc., or in an alternate system, a plosive such as /p/, /t/, /k/, etc.) in a selected band 2206. If a current probability within a frequency band varies from the previous probability, one or more leaky integrators and/or logic may modify the current probability. If the current probability exceeds a previous probability, the current probability is adapted by the addition of a smoothed difference (e.g., a difference times a smoothing factor) between the current and previous probabilities thorough an adder and multiplier 2209. If a current probability is less than the previous probability a percentage difference of the current and previous probabilities is added to the current probability by an adder and multiplier 2210. While a smoothing factor and percentage may be controlled and/or programmed with each application of the consonant detector; in some systems, the smoothing factor is much smaller than the applied percentage. The smoothing factor may comprise an average difference in percent across an "n" number of audio frames. "n" may comprise one, two, three or more integer frames of audio data.

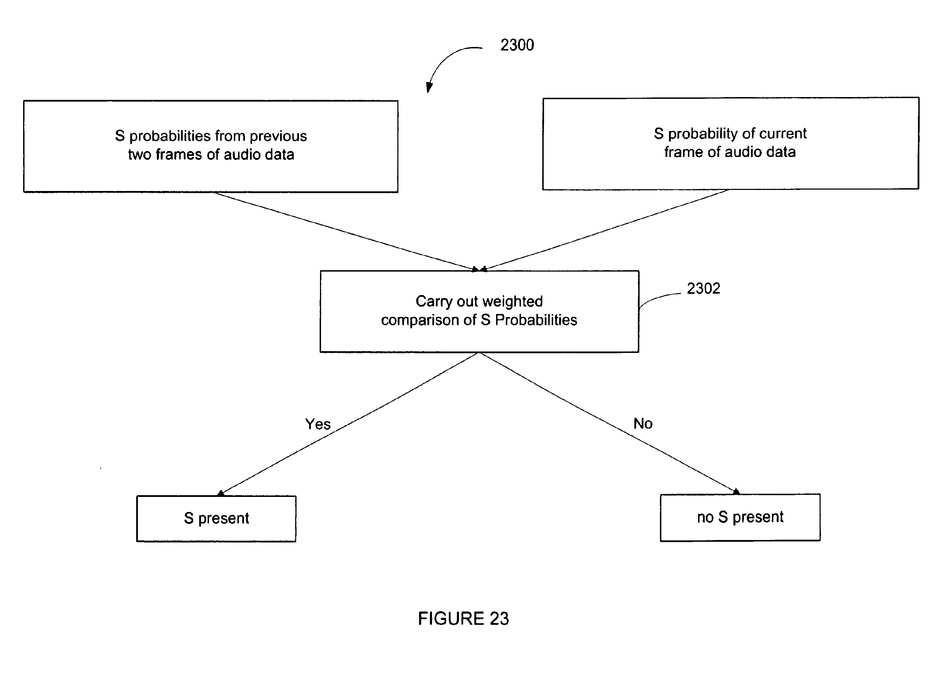

Figure 23 is a partial diagram of the consonant detector 2300. The average probability of two, three, or more (e.g., "n" integer) audio frames is compared to the current probability of an audio frame through a weighted comparator 2302. If the ratio of consecutive ratios (e.g., % $frame_{n-2}$ /% $frame_{n-1}$; % $frame_{n-1}$ /% $frame_n$) has an increasing trend, an /s/ (or other unvoiced sound or plosive) is detected. If the ratio of consecutive ratios shows a decreasing trend an end-point of the speech interval may be declared.

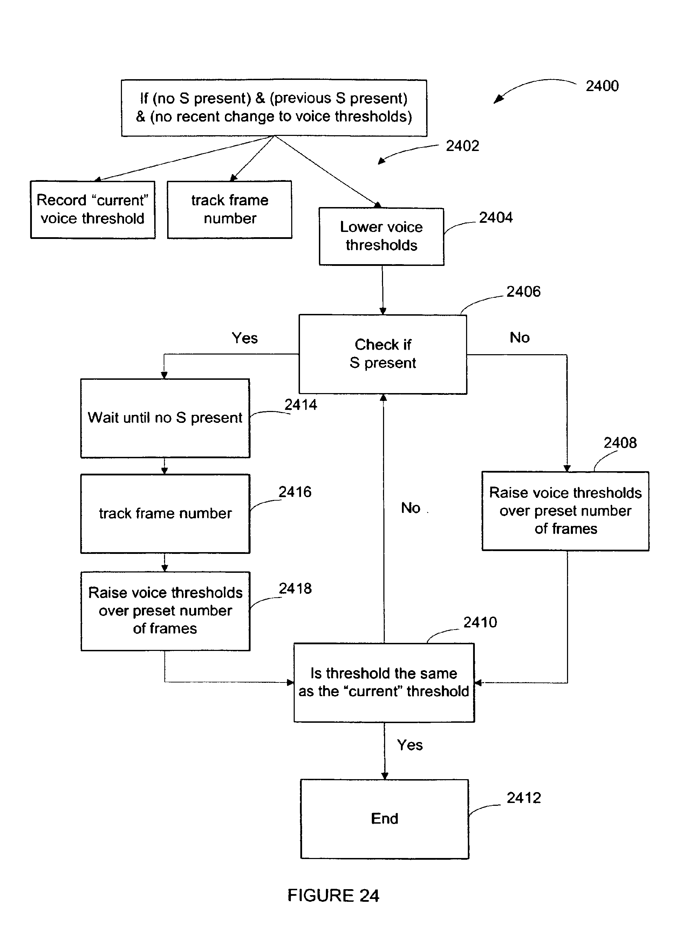

One process that may adjust the voice thresholds may be based on the detection of unvoiced speech, plosives, or a consonant such as an /s/. In Figure 24, if an /s/ is not detected in a current or previous frame and the voice thresholds have not changed during a predetermined period, the current voice thresholds and frame numbers are written to a local and/or remote memory 2402 before the voice thresholds are programmed to a predetermined level 2404. Because voice sound may have a more prominent harmonic structure than unvoiced sound and plosives, the voice thresholds may be programmed to a lower level. In some processes the voice thresholds may be dropped within a range of approximately 49% to about 76% of the current voice threshold to make the comparison more sensitive to weak harmonic structures. If an /s/ (or another unvoiced sound or plosive) is detected 2406, the voice thresholds are increased across a programmed number of audio frames 2408 before it is compared to the current thresholds 2410 and written to the local and/or remote memory. If the increased threshold and current thresholds are the same, the process ends 2412. Otherwise, the process analyzes more frames. If an /s/ is detected 2406, the process enters a wait state 2414 until an /s/ is no longer detected. When an /s/ is no longer detected the process stores the current frame number 2416 in the local and/or the remote memory and raises the voice thresholds across a programmed number of audio frames 2418. When the raised threshold and current thresholds are the same 2410, the process ends 2412. Otherwise, the process analyzes another frame of audio data.

In some processes the programmed number of audio frames comprises the difference between the originally stored frame number and the current frame number. In an alternative process, the programmed frame number comprises the number of frames occurring within a predetermined time period (e.g., may be very short such as about 100 ms). In these processes the voice threshold is raised to the previously stored current voice threshold across that time period. In an alternative process, a counter tracks the number of frames processed. The alternative process raises the voice threshold across a count of successive frames.

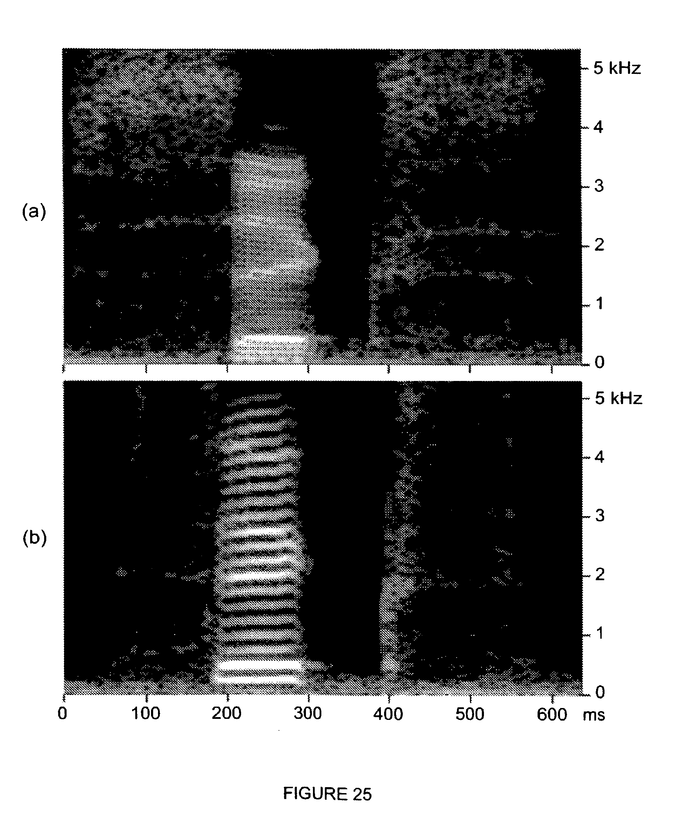

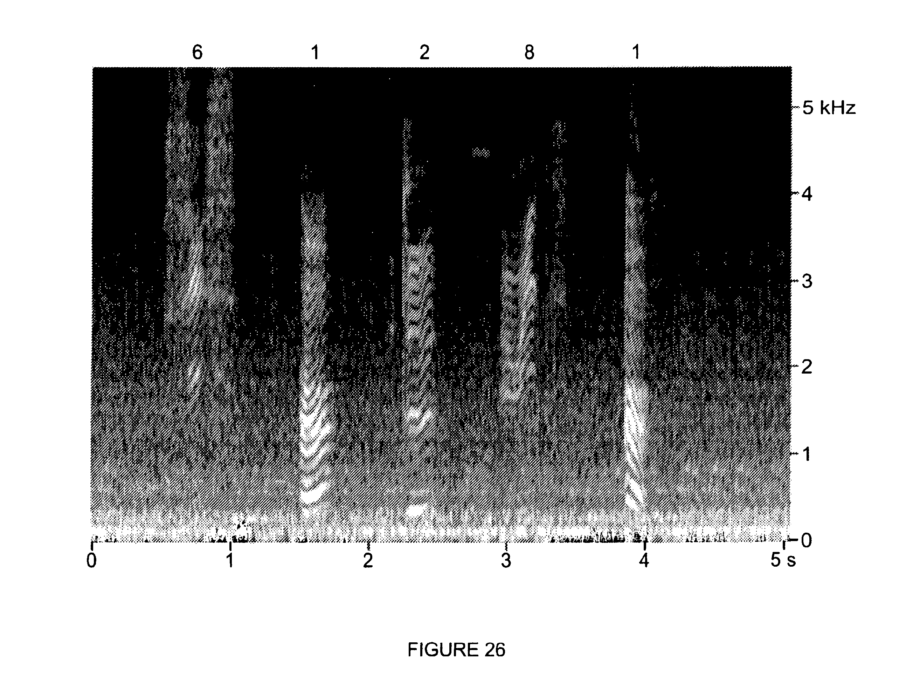

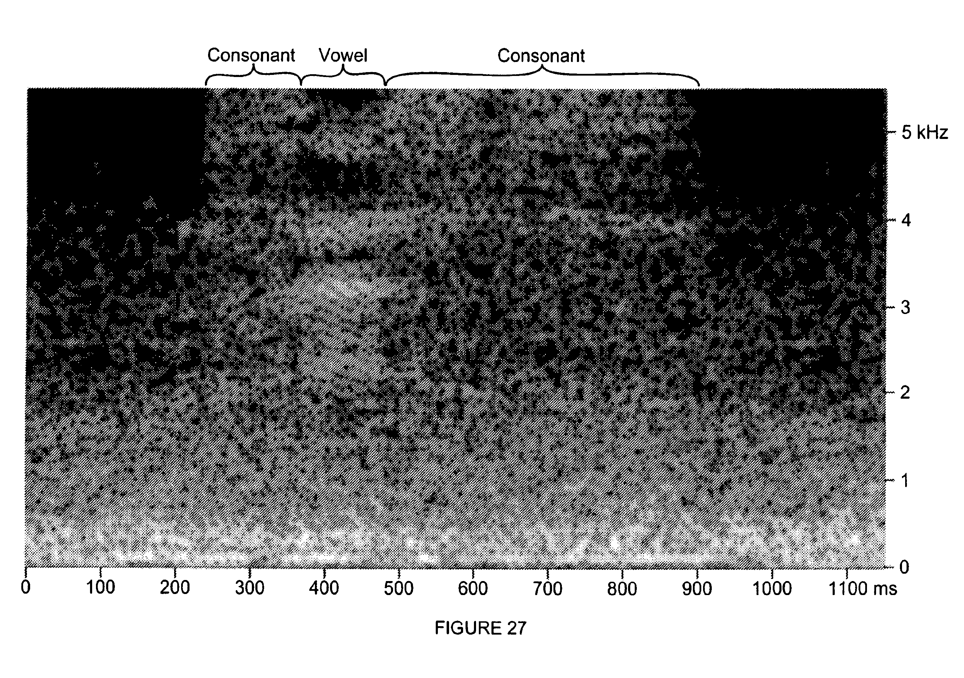

Figure 25 exemplifies spectrograms of a voiced segment spoken by a male (a) and a female (b). Both segments were spoken in a substantially noise free environment and show the short duration of a vowel preceded and followed by the longer duration of high frequency consonants. Note the strength of the low frequency harmonics in (a) in comparison to the harmonic structure in (b). Figure 26 exemplifies a spectrogram of a voiced segment of the numbers 6, 1, 2, 8, and 1 spoken in French. The articulation of the number 6 includes a short duration vowel preceded and followed by longer duration high-frequency consonant. Note that there is substantially less energy contained in the harmonics of the number 6 than in the other digits. Figure 27 exemplifies a magnified spectrogram of the number 6. In this figure the duration of the consonants are much longer than the vowel. Their approximate occurrence is annotated near the top of the figure. In Figure 27 the consonant that follows the vowel is approximately 400 ms long.

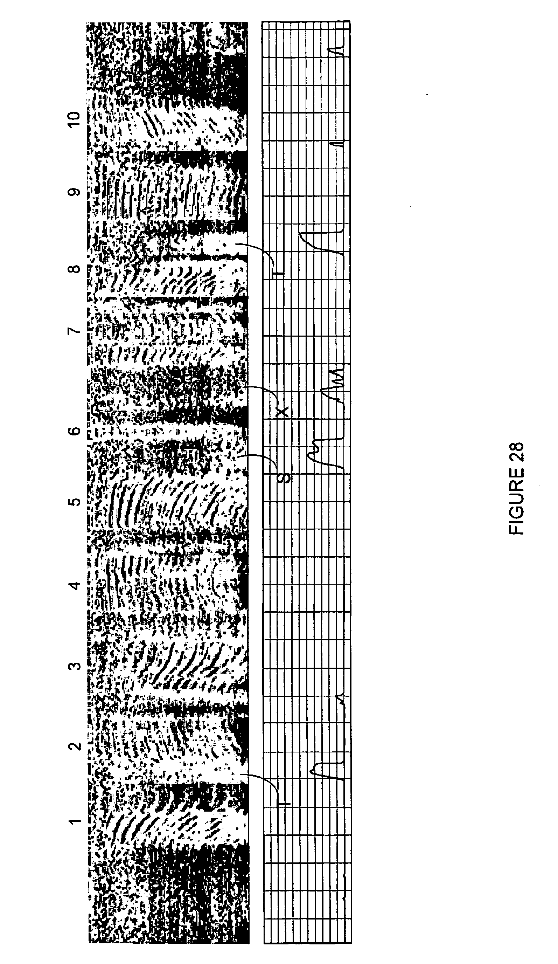

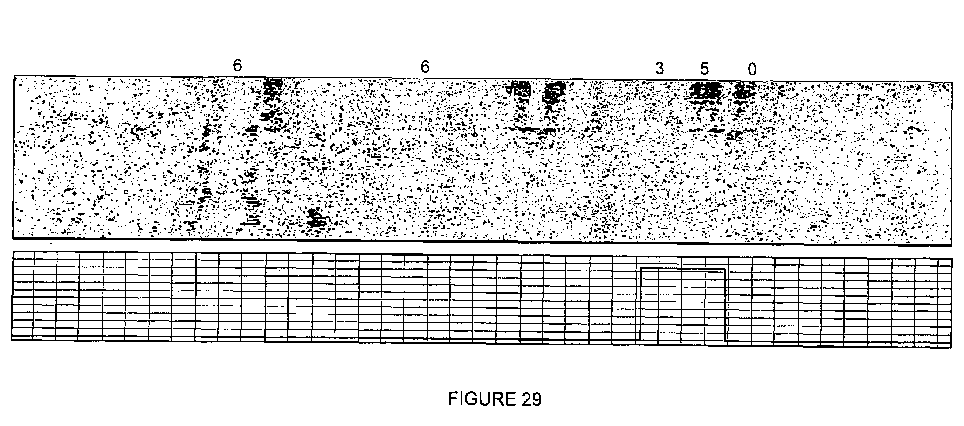

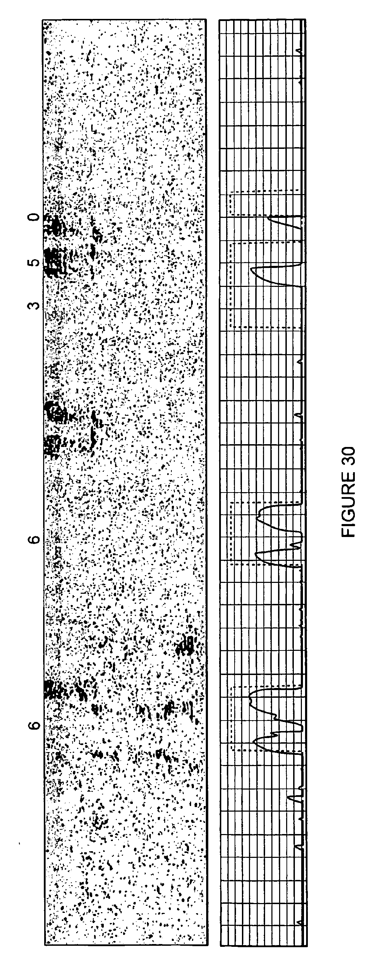

Figure 28 exemplifies spectrograms of a voiced segment positioned above an output of an /s/ (or consonant detector) detector. The /s/ detector may identify more than the occurrence of an /s/. Notice how other high-frequency consonants such as the /s/ and /x/ in the numbers 6 and 7 and the /t/ in the numbers 2 and 8 are detected and accurately located by the /s/ detector. Figure 29 exemplifies spectrogram of a voiced segment positioned above an end-point interval without an /s/ or consonant detection. The voiced segment comprises a French string spoken in a high noise condition. Notice how only the number 2 and 5 are detected and correctly end-pointed while other digits are not identified. Figure 30 exemplifies the same voice segment of Figure 29 positioned above end-point intervals adjusted by the /s/ or consonant detection. In this case each of the digits is captured within the interval.

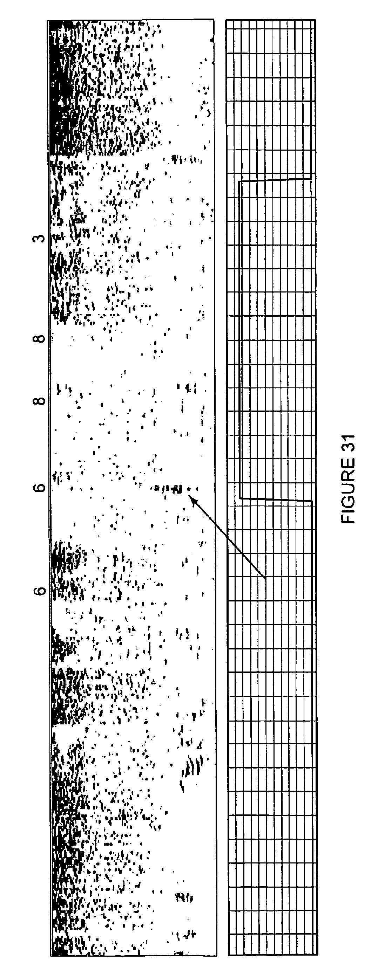

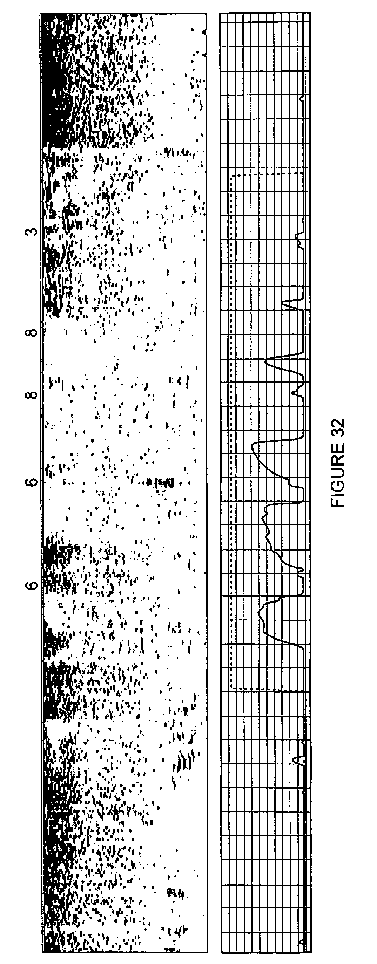

Figure 31 exemplifies spectrograms of a voiced segment positioned above an end-point interval without /s/ or consonant detection. In this example the significant energy in a vowel of the number 6 (highlighted by the arrow) trigger an end-point interval that captures the remaining sequence. If the six had less energy there is a probability that the entire segment would have been missed. Figure 32 exemplifies the same voice segment of Figure 32 positioned above end-point intervals adjusted by the /s/ or consonant detection. In this case each of the digits is captured within the interval.

The methods shown in Figures 24, 25, 21, 24, may be encoded in a signal bearing medium, a computer readable medium such as a memory, programmed within a device such as one or more integrated circuits, or processed by a controller or a computer. If the methods are performed by software, the software may reside in a memory partitioned with or interfaced to the rule module 2308, voice analysis module 1216, ASR engine 1218, a controller, or other types of device interface. The memory may include an ordered listing of executable instructions for implementing logical functions. Logic may comprise hardware, software, or a combination. A logical function may be implemented through digital circuitry, through source code, through analog circuitry, or through an analog source such as through an electrical, audio, or video signal. The software may be embodied in any computer-readable or signal-bearing medium, for use by, or in connection with an instruction executable system, system, or device. Such a system may include a computer-based system, a processor-containing system, or another system that may selectively fetch instructions from an instruction executable system, system, or device that may also execute instructions.

An exemplary end-pointer that determines a beginning and an end of a speech segment may include a voice triggering module that identifies a portion of an audio stream including an audio speech segment, a rule module in communication with the voice triggering module, where the rule module includes a plurality of rules used to analyze a part of the audio stream to detect a beginning and an end of the audio speech segment, and a consonant detector that detects occurrences of a high frequency consonant in the portion of the audio stream. The voice triggering module may identify a vowel. The consonant detector may include an /s/ detector. The portion of the audio stream may include a frame. The rule module may analyze an energy level in the portion of the audio stream, may identify the beginning of the audio segment or the end of the audio speech segment based on an output of the consonant detector, may analyze an elapsed time in the portion of the audio stream, may analyze a predetermined number of plosives in the portion of the audio stream, and/or may identify the beginning of the audio segment or the end of the audio speech segment based on a probability of a detection of a consonant. The end-pointer may also include an energy detector. The end-pointer may also include a controller in communication with a memory, where the rule module resides within the memory.

An exemplary method that identifies a beginning and an end of a speech segment using an end-pointer may include receiving a portion of an audio stream, determining whether the portion of the audio stream includes a triggering characteristic, determining if a portion of the audio stream includes a high frequency consonant, and applying a rule that passes only a portion of an audio stream to a device when a triggering characteristic identifies a beginning of a voiced segment and an end of a voiced segment, where the identification of the end of the voiced segment is based on the detection of the high frequency consonant. The rule may identify the portion of the audio stream to be sent to the device. The rule may be applied to a portion of the audio that does not include the triggering characteristic. The triggering characteristic may include a vowel. The triggering characteristic may include an /s/ or an /x/. The exemplary method may further include raising a voice threshold in response to a detection of a high frequency command. The voice threshold may be raised across a plurality of audio frames. The rule module may analyze an energy in the portion of the audio stream, an elapsed time in the portion of the audio stream, and/or a predetermined number of plosives in the portion of the audio stream. The method may further include marking the beginning and the end of a potential speech segment.

An exemplary end-pointer that identifies a beginning and an end of a speech segment may include an end-pointer analyzing a dynamic aspect of an audio stream to determine the beginning and the end of the speech segment and a high frequency consonant detector that marks the end of the speech segment. The dynamic aspect of the audio stream may be a characteristic of a speaker, an level of background noise in the audio stream, and/or an expected sound in the audio stream. The expected sound may be an expected answer to a question. The characteristic of the speaker may be a rate of speech.

An exemplary end-pointer that determines a beginning and an end of an audio speech segment in an audio stream may include an end-pointer that varies an amount of the audio input sent to a recognition device based on a plurality of rules and an output of an /s/ detector that adapts an endpoint of the audio input. The recognition device may be an automatic speech recognition device.

An exemplary signal-bearing medium having software that determines at least one of a beginning and end of an audio speech segment may include a detector that converts sound waves into operational signals, a triggering logic that analyzes a periodicity of the operational signals, a signal analysis logic that analyzes a variable portion of the sound waves that are associated with the audio speech segment to determine a beginning and end of the audio speech segment, and a consonant detector that provides an input to the signal analysis logic when an /s/ is detected. The signal analysis logic may analyze a time duration before a voiced speech sound. The signal analysis logic may analyze a time duration after a voiced speech sound. The signal analysis logic may analyze a number of transition before or after a voiced speech sound, a duration of continuous silence before a voiced speech sound, and/or a duration of continuous silence after a voiced speech sound. The signal analysis logic may be coupled to a vehicle, and/or an audio system.

A speech enhancement system improves the perceptual quality of a processed voice signal. The system improves the perceptual quality of a received voice signal by removing unwanted noise from a voice signal detected by a device or program that converts sound waves into electrical or optical signals. The system removes undesirable signals that may result in the loss of information.

The system may model temporal and/or spectral characteristics of noises. The system receives and analyzes signals to determine whether a random or persistent signal corresponds to one or more modeled noise characteristics. When one or more noise characteristics are detected, the noise characteristics are substantially removed or dampened from the signal to provide a less noisy or clearer processed voice signal.

A speech enhancement system improves the perceptual quality of a voice signal. The system models noises that may be heard within a moving or a stationary vehicle. The system analyzes a signal to determine whether characteristics of that signal have vocal or speech characteristics. If the signal lacks vocal or speech characteristics, the system may substantially eliminate or dampen undesired portions of the signal. Noise may be dampened in the presence or absence of speech, and may be detected and dampened in real time, near real-time, or after a delay, such as a buffering delay (e.g., about 300 to about 500 milliseconds). The speech enhancement system may also dampen or substantially remove continuous background noises, such as engine noise, and other noises, such as wind noise, tire noise, passing tire hiss noises, transient noises, etc. The system may also substantially dampen the "musical noise," squeaks, squawks, clicks, drips, pops, tones, and other sound artifacts generated by noise suppression systems.

Figure 33 is a partial block diagram of a speech enhancement system 3300. The speech enhancement system 3300 may encompass programmed hardware and/or software that may be executed on one or more processors. Such processors may be running one or more operating systems. The speech enhancement system 3300 includes a noise detector 3302 and a noise attenuator 3304. A residual attenuator may also be used to substantially remove artifacts and dampen other unwanted components of the signal. The noise detector 3302 may model one, two, three, or many more noises or a combination of noises. The noise(s) may have unique attributes that identify or make the noise distinguishable from speech or vocal sounds.

Audio signals (e.g., that may be detected from about 20 Hz to about 20 kHz (cycles per second)) may include both voice and noise components that may be distinguished through modeling. In one speech enhancement system, aural signals are compared to one or more models to determine whether the signals include noise or noise like components. When identified, these undesired components may be substantially removed or dampened to provide a less noisy aural signal.

Some noises have a temporal and/or a spectral characteristic that may be modeled. Through modeling, a noise detector 3302 determines whether a received signal includes noise components that may be rapidly evolving or have non-periodic or periodic segments. When the noise detector 3302 detects a noise component in a received signal, the noise may be dampened or nearly removed by the noise attenuator 3304.

The speech enhancement system 3300 may encompass any noise attenuating system that dampens or nearly removes one or more noises from a signal. Examples of noise attenuating systems that may be used to dampen or substantially remove noises from the a signal that may include 1) systems employing a neural network mapping of a noisy signal containing noise to a noise reduced signal; 2) systems that subtract the noise from a received signal; 3) systems that use the noise signal to select a noise-reduced signal from a code book; and 4) systems that process a noise component or signal to generate a noise-reduced signal based on a reconstruction of an original masked signal or a noise reduced signal. In some instances noise attenuators may also attenuate continuous noise that may be part of the short term spectra of the received signal. A noise attenuator may also interface with or include an optional residual attenuator for removing additional sound artifacts such as the "musical noise," squeaks, squawks, chirps, clicks, drips, pops, tones, or others that may result from the dampening or substantial removal of other noises.

Some noise may be divided into two categories: periodic noise and non-periodic noise. Periodic noise may include repetitive sounds such as turn indicator clicks, engine or drive train noise and windshield wiper noise. Periodic noise may have some harmonic structure due to its periodic nature. Non-periodic noise may include sounds such as transient road noises, passing tire hiss, rain, wind buffets, and other random noises. Non-periodic noises may occur at non-periodic intervals, may not have a harmonic structure, and may have a short, transient, time duration.

Speech may also be divided into two categories: voiced speech, such as vowel sounds and unvoiced speech, such as consonants. Voiced speech exhibits a regular harmonic structure, or harmonic peaks weighted by the spectral envelope that may describe the formant structure. Unvoiced speech does not exhibit a harmonic or formant structure. An audio signal including both noise and speech components may comprise any combination of non-periodic noises, periodic noises, and voiced and/or unvoiced speech.

The noise detector 3302 may separate the noise-like components from the remaining signal in real-time, near real-time, or after a delay. Some noise detectors 3302 separate the noise-like segments regardless of the amplitude or complexity of the received signal 3301. When the noise detector 3302 detects a noise, the noise detector 3302 may model the temporal and/or spectral characteristics of the detected noise. The noise detector 3302 may generate or retain a pre-programmed model of the noise, or store selected attributes of the model in a memory. Using a processor to process the model or attributes of the model, the noise attenuator 3304 nearly removes or dampens the noise from the received signal 3301. A plurality of noise models may be used to model the noise. Some models are combined, averaged, or manipulated to generate a desired response. Some other models are derived from the attributes of one or more noises as described by other Figures herein. Dynamic models may be automatically manipulated or changed. Other models are static and may be manually changed. Automatic or manual change may occur when a speech enhancement system detects or identifies changing conditions of the received (e.g., input) signal.

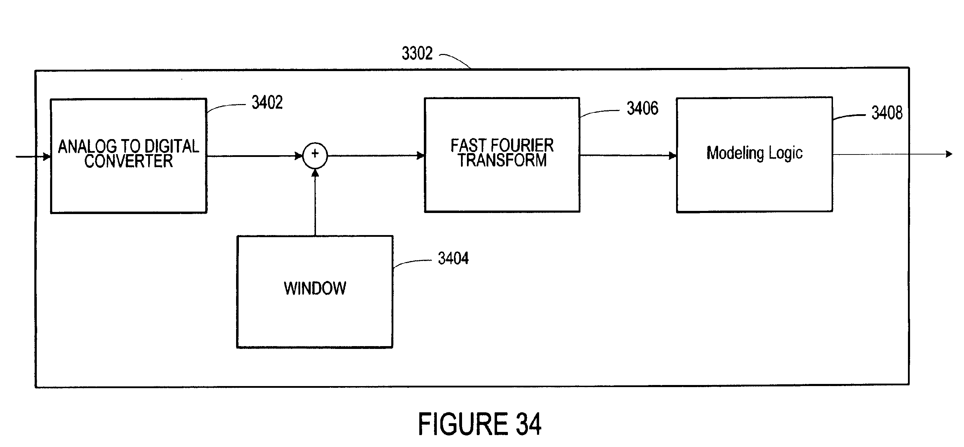

Figure 34 is a block diagram of an exemplary noise detector 3302. The noise detector 3302 receives or detects an input signal that may comprise speech, noise and/or a combination of speech and noise. The received or detected signal is digitized at a predetermined frequency. To assure good quality, the voice signal is converted into a pulse-code-modulated (PCM) signal by an analog-to-digital converter 3402 (ADC) having a predetermined sample rate. A smoothing window function generator 3404 generates a windowing function such as a Hanning window that is applied to blocks of data to obtain a windowed signal. The complex spectrum for the windowed signal may be obtained by means of a Fast Fourier Transform (FFT) 3406 or other time-frequency transformation methods or systems. The FFT 3406 separates the digitized signal into frequency bins, and calculates the amplitude of the various frequency components of the received signal for each frequency bin. The spectral components of the frequency bins may be monitored over time by a modeling logic 3408.

Under some conditions, some speech enhancement systems process two aspects to model noise. The first aspect comprises modeling individual sound events that make up the noise, and the second may comprise modeling the appropriate temporal space between the individual events (e.g., two or more events). The individual sound events may have a characteristic shape. This shape, or attributes of the characteristic shape, may be identified and/or stored in a memory by the modeling logic 3408. A correlation between the spectral and/or temporal shape of a received signal and a modeled shape or between attributes of the received signal spectrum and the modeled signal attributes may identify a potential noise component or segment. When a potential noise has been identified, the modeling logic 3408 may look backward, forward, or forward and backward within the one or more time window to determine if a noise was received or identified.

Alternatively or additionally, the modeling logic 3408 may determine a probability that the signal includes noise, and may identify sound events as a noise when a probability exceeds a pre-programmed threshold or exceeds a correlation value. The correlation and thresholds may depend on various factors that may be manually or automatically changed. In some speech enhancement systems, the factors depend on the presence of other noises or speech components within the input signal. When the noise detector 3302 detects a noise, the characteristics of the detected noise may be communicated to the noise attenuator 3304 and the noise may be substantially removed or dampened.

As more windows of sound are processed by some speech enhancement systems, the noise detector 3302 may derive or modify some or all of its noise models. Some noise detectors derive average noise models for the individual sound events comprising noises, and in some circumstances, the temporal spacing if more than one noise event occurs. A time-smoothed or weighted average may be used to model continuous or non-continuous noise events for each frequency bin or for selected frequency bins. An average model may be updated when noise events are detected in the absence of speech. Fully bounding a noise when updating one exemplary average noise model may increase the probability of an accurate detection. A leaky integrator or weighted average or other logic may be used to model the interval between multiple or more than one sound events.

To minimize the "music noise," squeaks, squawks, chirps, clicks, drips, pops, or other sound artifacts, an optional residual attenuator may also condition the voice signal before it is converted to the time domain. The residual attenuator may be combined with the noise attenuator 3304, combined with one or more other elements of the speech enhancement system, or comprise a separate stand alone element.

Some residual attenuators track the power spectrum within a low frequency range. In some circumstances, low frequency range may extend from about 0 Hz up to about 2 kHz. When a significant change or a large increase in signal power is detected, an improvement may be obtained by controlling (increasing or decreasing) or dampening the transmitted power in the low frequency range to a predetermined or a calculated threshold. One calculated threshold may be almost equal to, or may be based on, the average spectral power of a similar or the same frequency range monitored earlier in time.

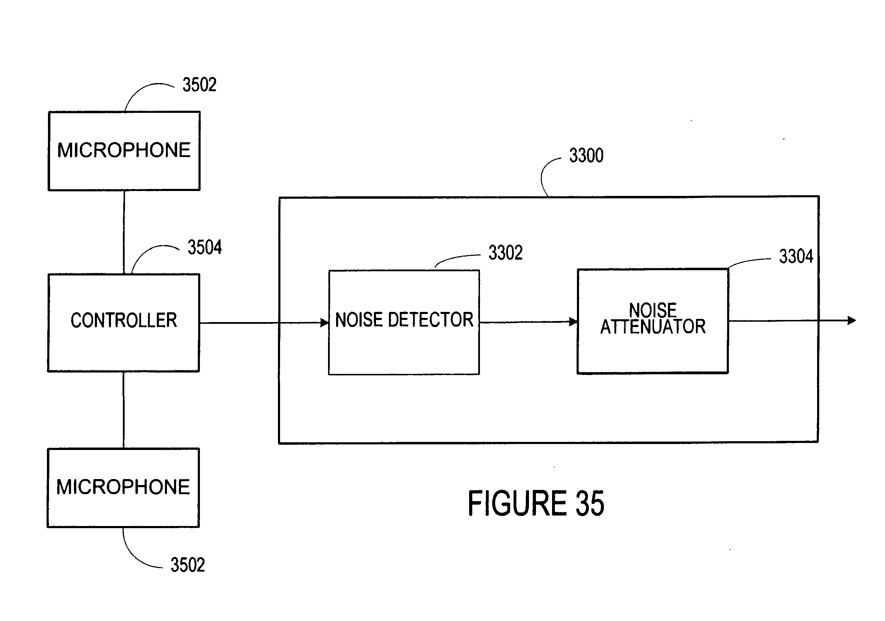

Further improvements to voice quality may be achieved by pre-conditioning the input signal before it is processed by the noise detector 3302. One pre-processing system may exploit the lag time caused by a signal arriving at different times at different detectors that are positioned apart from one another. If multiple detectors that convert sound into an electric or optic signal are used, such as the microphones 3502 shown in figure 35, the pre-processing system may include a controller 3504 or processor that automatically selects the detectors or microphone 3502 or automatically selects the channel that senses the least amount of noise. When another microphone 3502 is selected, the electric or optic signal may be combined with the previously generated signal before being processed by the noise detector 3302.

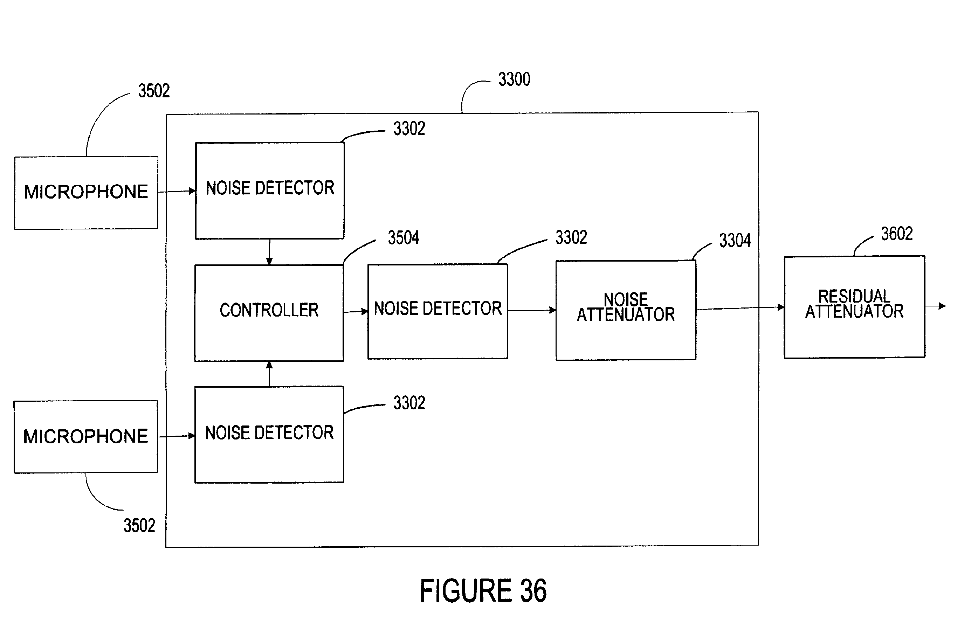

Alternatively, noise detection may be performed on each of the channels of sound detected from the detectors or microphones 3502, respectively, as shown in figure 36. A mixing of one or more channels may occur by switching between the outputs of the detectors or microphones 3502. Alternatively or additionally, the controller 3504 or processor may include a comparator. In systems that may include or comprise a comparator, a direction of the signal may be generated from differences in the amplitude or timing of signals received from the detectors or microphones 3502. Direction detection may be improved by pointing the microphones 3502 in different directions or by offsetting their positions within a vehicle or area. The position and/or direction of the microphones may be automatically modified by the controller 3504 or processor when the detectors or microphones are mechanized.

In some speech enhancement systems, the output signals from the detectors or microphones may be evaluated at frequencies above or below a certain threshold frequency (for example, by using a high-pass or low pass filter). The threshold frequency may be automatically updated over time. For example, when a vehicle is traveling at a higher speed, the threshold frequency for noise detection may be set relatively high, because the maximum frequency of some road noises increase with vehicle speed. Alternatively, a processor or the controller 3504 may combine the output signals of more than one microphone at a specific frequency or frequency range through a weighting function. Some alternative systems include a residual attenuator 3602; and in some alternative systems noise detection occurs after the signal is combined.

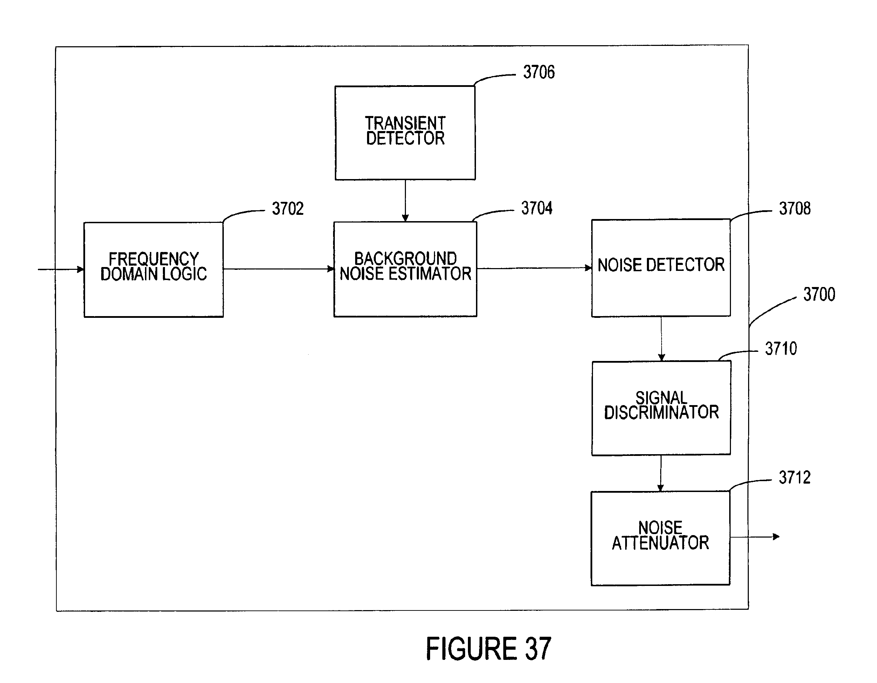

Figure 37 is an alternative speech enhancement system 3700 that improves the perceptual quality of a voice signal. Time-frequency transform logic 3702 digitizes and converts a time varying signal into the frequency domain. A background noise estimator 3704 measures the continuous, nearly continuous, or ambient noise that occurs near a sound source or the receiver. The background noise estimator 3704 may comprise a power detector that averages the acoustic power in each frequency bin in the power, magnitude, or logarithmic domain.

To prevent biased background noise estimations, an optional transient noise detector 3706 that detects short lived unpredictable noises may disable or modulate the background noise estimation process during abnormal or unpredictable increases in power. In Figure 37, the transient noise detector 3706 may disable the background noise estimator 3704 when an instantaneous background noise $B(f, i)$ exceeds an average background noise $B(f)Ave$ by more than a selected decibel level 'c.' This relationship may be expressed as:

$$B(f,i) > B(f)Ave + c \qquad \text{(Equation 1)}$$

Alternatively or additionally, the average background noise may be updated depending on the signal to noise ratio (SNR). An example closed algorithm is one which adapts a leaky integrator depending on the SNR:

$$B(f)Ave' = aB(f)Ave + (1-a)S \qquad (Equation\ 2)$$

where a is a function of the SNR and S is the instantaneous signal. In this example, the higher the SNR, the slower the average background noise is adapted.

To detect a sound event that may correspond to a noise that is not background noise, the noise detector 3708 may fit a function to a selected portion of the signal in the time and/or frequency domain. A correlation between a function and the signal envelope in the time and/or frequency domain may identify a sound event corresponding to a noise event. The correlation threshold at which a portion of the signal is identified as a sound event corresponding to a potential noise may depend on a desired clarity of a processed voice signal and the variations in width and sharpness of the noise. Alternatively or additionally, the system may determine a probability that the signal includes a noise, and may identify a noise when that probability exceeds a probability threshold. The correlation and probability thresholds may depend on various factors. In some speech enhancement systems, the factors may include the presence of other noises or speech within the input signal. When the noise detector 3708 detects a noise, the characteristics of the noise may be communicated to the noise attenuator 3712 for dampening or substantial removal.

A signal discriminator 3710 may mark the voice and noise components of the spectrum in real time, near real time or after a delay. Any method may be used to distinguish voice from noise. Spoken signals may be identified by (1) the narrow widths of their bands or peaks; (2) the broad resonances or formants that may be created by the vocal tract shape of the person speaking; (3) the rate at which certain characteristics change with time (e.g., a time-frequency model may be developed to identify spoken signals based on how they change with time); and when multiple detectors or microphones are used, (4) the correlation, differences, or similarities of the output signals of the detectors or microphones; and (5) by other methods.

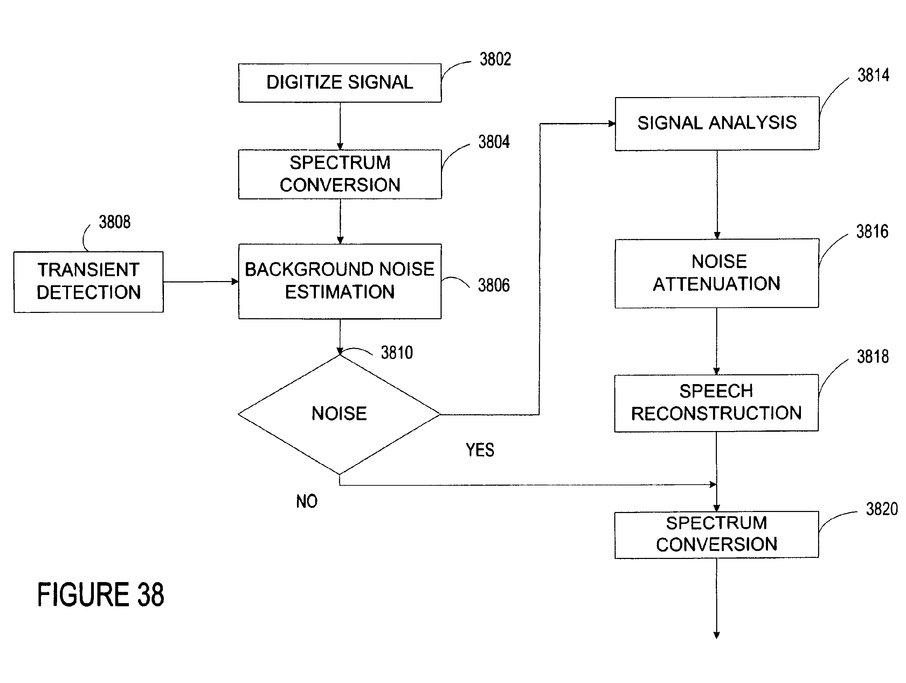

Figure 38 is a flow diagram of a speech enhancement system that substantially removes or dampens continuous or intermittent noise to enhance the perceptual quality of a processed voice signal. At 3802 a received or detected signal is digitized at a predetermined frequency. To assure a good quality voice, the voice signal may be converted to a PCM signal by an ADC. At 3804 a complex spectrum for the windowed signal may be obtained by means of an FFT that separates the digitized signals into frequency bins, with each bin identifying a magnitude and phase across a frequency range.

At 3806, a continuous background or ambient noise estimate is determined. The background noise estimate may comprise an average of the acoustic power in each frequency bin. To prevent biased noise estimates during noise events, the noise estimate process may be disabled during abnormal or unexpected increases in detected power. In some speech enhancement systems, a transient noise detector or transient noise detection process 3808 disables the background noise estimate when an instantaneous background noise exceeds an average background noise or a pre-programmed background noise level by more than a predetermined level.

At 3810 a noise may be detected when one or more sound events are detected. The sound events may be identified by their spectral and/or temporal shape, by characteristics of their spectral and/or temporal shape, or by other attributes. When a pair of sound events identifies a noise, temporal spacing between the sound events may be monitored or calculated to confirm the detection of a re-occurring noise.

The noise model may be changed or manipulated automatically or by a user. Some systems automatically adapt to changing conditions. Some noise models may be constrained by rules or rule-based programming. For example, if a vowel or another harmonic structure is detected in some speech enhancement methods, the noise detection method may limit a noise correction. In some speech enhancement methods the noise correction may dampen a portion of signal or signal component to values less than or equal to an average value monitored or detected earlier in time. An alternative speech enhancement system may update one or more noise models or attributes of one or more noise models, such as the spectral and/or temporal shape of the modeled sound events to be changed or updated only during unvoiced speech segments. If a speech segment or mixed speech and noise segment is detected, the noise model or attributes of the noise model may not be changed or updated while that segment is detected or while it is processed. If no speech is detected, the noise model may be changed or updated. Many other optional rules, attributes, or constraints may include or apply to one or more of the models.

If a noise is detected at 3810, a signal analysis may be performed at 3814 to discriminate or mark the spoken signal from the noise-like segments. Spoken signals may be identified by (1) the narrow widths of their bands or peaks; (2) the broad resonances or formants, which may be created by the vocal tract shape of the person speaking; (3) the rate at which certain characteristics change with time (e.g., a time-frequency model may be developed to identify spoken signals based on how they change with time); and when multiple detectors or microphones are used, (4) the correlation, differences, or similarities of the output signals of the detectors or microphones, and (5) by other methods.

To overcome the effects of noises, a noise may be substantially removed or dampened at 3816. One exemplary method that may be used adds the noise model to a recorded or modeled continuous noise. In the power spectrum, the modeled noise is then substantially removed or dampened from the signal spectrum. If an underlying speech signal is masked by a noise, or masked by a continuous noise, an optional conventional or modified interpolation method may be used to reconstruct the speech signal at an optional process 3818. A time series synthesis may then be used to convert the signal power to the time domain at 3820. The result may be a reconstructed speech signal from which the noise is dampened or has been substantially removed. If no noise is detected at 3810, the signal may be converted into the time domain at 3820 to provide the reconstructed speech signal.

The method of Figure 38 may be encoded in a signal bearing medium, a computer readable medium such as a memory, programmed within a device such as one or more integrated circuits, or processed by a controller or a computer. If the methods are performed by software, the software may reside in a memory resident to or interfaced to the noise detector 3302, processor, a communication interface, or any other type of non-volatile or volatile memory interfaced or resident to the speech enhancement system 3300 or 3700. The memory may include an ordered listing of executable instructions for implementing logical functions. A logical function or any system element described may be implemented through optic circuitry, digital circuitry, through source code, through analog circuitry, through an analog source such as an analog electrical, audio, or video signal or a combination. The software may be embodied in any computer-readable or signal-bearing medium, for use by, or in connection with an instruction executable system, apparatus, or device. Such a system may include a computer-based system, a processor-containing system, or another system that may selectively fetch instructions from an instruction executable system, apparatus, or device that may also execute instructions.

The above-described systems may condition signals received from only one or more than one microphone or detector. Many combinations of systems may be used to identify and track noises. Besides comparing a sound event to noise models to identify noise or analyzing characteristics of a signal to identify noise or potential noise components or segments, some systems may detect and isolate any parts of the signal having energy greater than the modeled sound events. One or more of the systems described above may also interface or may be a unitary part of alternative speech enhancement logic.

Other alternative speech enhancement systems comprise combinations of the structure and functions described above. These speech enhancement systems are formed from any combination of structure and function described above or illustrated within the figures. The system may be implemented in software or hardware. The hardware may include a processor or a controller having volatile and/or non-volatile memory and may also comprise interfaces to peripheral devices through wireless and/or hardwire mediums.

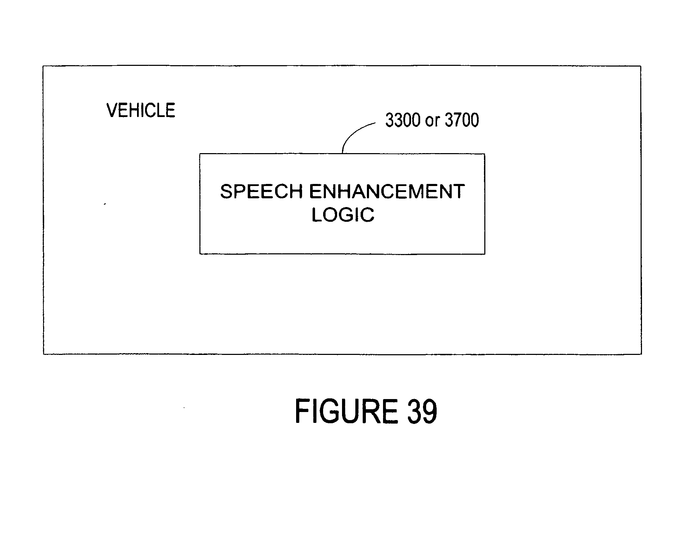

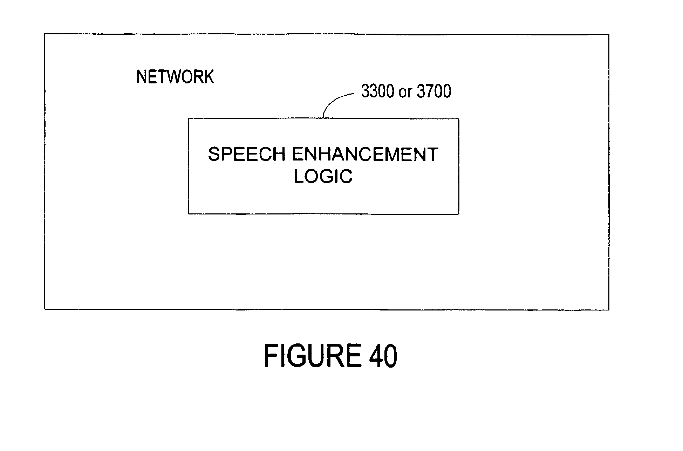

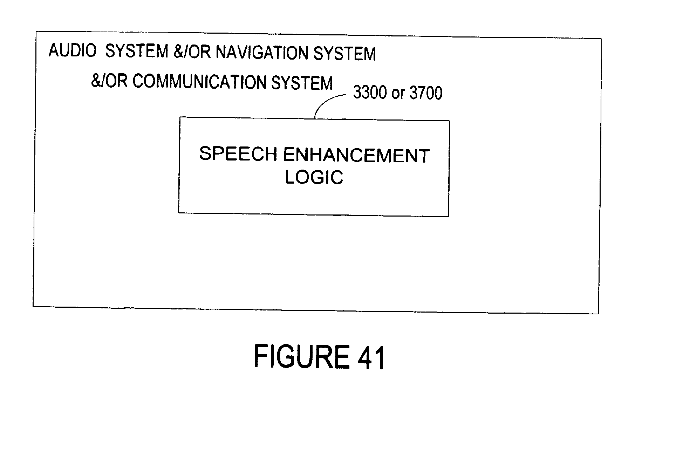

The speech enhancement system is easily adaptable to any technology or devices. Some speech enhancement systems or components interface or couple vehicles as shown in Figure 39, publicly or privately accessible networks (e.g., Internet and intranets) as shown in Figure 40, instruments that convert voice and other sounds into a form that may be transmitted to remote locations, such as landline and wireless phones and audio systems as shown in Figure 41, video systems, personal noise reduction systems, and other mobile or fixed systems that may be susceptible to transient noises. The communication systems may include portable analog or digital audio and/or video players (e.g., such as an iPod®), or multimedia systems that include or interface speech enhancement systems or retain speech enhancement logic or software on a hard drive, such as a pocket-sized ultra-light hard-drive, a memory such as a flash memory, or a storage media that stores and retrieves data. The speech enhancement systems may interface or may be integrated into wearable articles or accessories, such as eyewear (e.g., glasses, goggles, etc.) that may include wire free connectivity for wireless communication and music listening (e.g., Bluetooth stereo or aural technology) jackets, hats, or other clothing that enables or facilitates hands-free listening or hands-free communication.

The speech enhancement system improves the perceptual quality of a voice signal. The logic may automatically learn and encode the shape and form of the noise associated with a noise in real time, near real time or after a delay. By tracking selected attributes, some system may eliminate, substantially eliminate, or dampen noise using a limited memory that temporarily or permanently stores selected attributes or models of the noise. The speech enhancement system may also dampen a continuous noise and/or the squeaks, squawks, chirps, clicks, drips, pops, tones, or other sound artifacts that may be generated by some speech enhancement systems and may reconstruct voice when needed.

An exemplary speech enhancement system operative to suppress noise from a received signal may include a noise detector operative to store a model of a noise component within a memory and operative to detect the presence of a noise component in the received signal, and a noise attenuator in communication with the noise detector and operative to substantially remove the noise component when an attribute of the received signal substantially matches an attribute of the stored model of the noise component. The the noise detector may be operative to compare the attribute of the received signal to the attribute of the stored model of the noise component. The model of the noise component may include a spectral attribute of the noise component and a temporal attribute of the noise component. The temporal component may include a first sound event and a substantially similar second sound event separated by a period of time. The spectral component may include one or more attributes of a spectral shape of a sound event associated with a road noise. The noise detector and the noise attenuator may be coupled to a vehicle.

An exemplary noise detector operative to detect a noise that may affect a signal may include an analog to digital converter operative to convert a received signal into a digital signal, a windowing function operative to separate the received signal into a plurality of signal analysis windows, a transform logic operative to transform the plurality of signal analysis windows to the frequency domain, and a modeling logic operative to store attributes of a noise, and compare the stored attributes to a transformed signal to identify a noise. The analog to digital converter may convert the received signal into a pulse code modulated signal. The windowing function may include a Hanning window function generator. The transform module may be a Fast Fourier Transform logic. The attributes of the noise may include a temporal characteristic substantially unique to an undesired signal, a spectral characteristic substantially unique to an undesired signal, and/or characteristics of two sound events. The modeling logic may be operative to fit a function to a selected portion of the signal in a time-frequency domain to evaluate the spectro-temporal shape characteristics of the two sound events. The exemplary noise detector may also include a residual attenuator operative to track the power spectrum of the received. The residual attenuator may be operative to limit the transmitted power in a low frequency range to a predetermined threshold when a large increase in signal power is detected. The predetermined threshold may be based on the average spectral power of the received signal in the low frequency range from an earlier period in time.

An exemplary method operative to substantially remove noises from a signal may include modeling characteristics of a noise, analyzing the signal to determine whether characteristics of the signal correspond to the modeled characteristics of the noises, and substantially removing the characteristics of the noise from the received signal. The exemplary method may further include modeling a temporal separation between more than one sound events. The spectral shape attributes of the more than one sound event may be a broadband event with peak energy levels occurring at relatively lower frequencies.

A logical function may be implemented through digital circuitry, through source code, through analog circuitry, or through an analog source such as through an analog electrical, or audio signals. The software may be embodied in any computer-readable medium or signal-bearing medium, for use by, or in connection with an instruction executable system or apparatus resident to a vehicle or a hands-free or wireless communication system. Alternatively, the software may be embodied in media players (including portable media players) and/or recorders. Such a system may include a computer-based system, a processor-containing system that includes an input and output interface that may communicate with an automotive or wireless communication bus through any hardwired or wireless automotive communication protocol, combinations, or other hardwired or wireless communication protocols to a local or remote destination, server, or cluster.

A "computer-readable medium," "machine-readable medium," "propagated-signal" medium, and/or "signal-bearing medium" may comprise any means that contains, stores, communicates, propagates, or transports software for use by or in connection with an instruction executable system, system, or device. The machine-readable medium may selectively be, but not limited to, an electronic, magnetic, optical, electromagnetic, infrared, or semiconductor system, system, device, or propagation medium. A non-exhaustive list of examples of a machine-readable medium would include: an electrical connection "electronic" having one or more wires, a portable magnetic or optical disk, a volatile memory such as a Random Access Memory "RAM" (electronic), a Read-Only Memory "ROM" (electronic), an Erasable Programmable Read-Only Memory (EPROM or Flash memory) (electronic), or an optical fiber (optical). A machine-readable medium may also include a tangible medium upon which software is printed, as the software may be electronically stored as an image or in another format (e.g., through an optical scan), then compiled, and/or interpreted or otherwise processed. The processed medium may then be stored in a computer and/or machine memory.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

**Claims**

1. A system adapted to evaluated a hands free communication system, comprising:

    a first audio database server (306) that retains voiced and/or unvoiced artificial voice or speech segments to be transmitted through a loudspeaker (310);
    a speech detector (304) configured to determine when to transmit a frame of the voiced and/or unvoiced artificial voice or speech segment;
    a synchronizer configured to synchronize an output of the loudspeaker to at least partially overlap with an output of a second audio database server (302) that accesses diagnostic word pairs;
    a narrowband noise synthesizer (312) configured to generate and transmit periodic and/or non-periodic noise signals temporally with the output of the loudspeaker;
    a mixer (314) that receives and mixes the output of the loudspeaker, an audible representation of the diagnostic word pairs, and an output of the narrowband noise synthesizer;
    an automatic speech recognition engine (324) in communication with the mixer programmed to select one of the diagnostic word pairs; and
a data analysis controller (326) remote from the automatic speech recognition engine configured to measure a level of intelligibility of the hands free system based on an evaluation of the automatic speech recognition engine's word selections.

2. The system that evaluates a hands free communication system of claim 1 where the data analysis controller (326) is resident to an event-driven-server.

3. The system that evaluates the hands free communication system of claim 1 where the data analysis controller (326) is resident to a process-driven-server.

4. The system that evaluates the hands free communication system of claim 3 where the process-driven-server renders an impression characteristic that is transmitted to a client device.

5. The system that evaluates the hands free communication system of claim 4 further comprising a graphical user interface (1002) configured to present the diagnostic word pairs to a user and receive the selection of the two words that the user perceived to have heard.

6. The system that evaluates the hands free communication system of claim 5 further comprising a first convolver (402) interfaced to the first audio database server (306) and a second convolver (402) interfaced to the second audio database server (302).

7. The system that evaluates the hands free communication system of claim 1 where the selection of one of the diagnostic word pairs is based on voicing, nasality, sustentation, graveness, or a compactness attribute.

8. The system that evaluates the hands free communication system of claim 1 where the selection of one of the diagnostic word pairs is based on voicing, nasality, sustentation, graveness, and a compactness attribute.

9. The system that evaluates the hands free communication system of claim 1 further comprising an energy level detector that measures endpoints of the selected one of the diagnostic word pairs.

10. The system that evaluates the hands free communication system of claim 1 where the data analysis controller (326) remote from the automatic speech recognition engine is further configured to measure the level of intelligibility of a hands free system based on an evaluation of the automatic speech recognition engine's word selections and a user's word selection received through a user interface (1002).

**Patentansprüche**

1. Ein System, das ausgebildet ist zum Evaluieren eines Freisprech-Kommunikationssystems, das aufweist:

einen ersten Audio-Datenbank-Server (306), der stimmhafte und/oder stimmlose künstliche Stimme- oder Sprache-Segmente aufbewahrt, die über einen Lautsprecher (310) zu übertragen sind;
einen Sprach-Detektor (304), der konfiguriert ist zum Bestimmen, wann ein Rahmen des stimmhaften und/oder stimmlosen künstlichen Stimme- oder Sprache-Segments zu übertragen ist;
einen Synchronisierer, der konfiguriert ist zum Synchronisieren einer Ausgabe des Lautsprechers, um zumindest teilweise mit einer Ausgabe eines zweiten Audio-Datenbank-Servers (302) zu überlappen, der auf diagnostische Wortpaare zugreift;
einen Schmalband-Rauschen- Synthesizer (312), der konfiguriert ist zum Erzeugen und Übertragen periodischer und/oder nicht-periodischer Rauschensignale zeitlich mit der Ausgabe des Lautsprechers;
einen Mischer (314), der die Ausgabe des Lautsprechers, eine hörbare Repräsentation der diagnostischen Wortpaare, und eine Ausgabe des Schmalband-Rauschen-Synthesizers empfängt und mischt;
eine automatische Spracherkennungsmaschine (324) in Kommunikation mit dem Mischer, die programmiert ist, eines der diagnostischen Wortpaare auszuwählen; und
eine Datenanalyse-Steuervorrichtung (326) entfernt von der automatischen Spracherkennungsmaschine, die konfiguriert ist, einen Pegel einer Verständlichkeit des Freisprechsystems zu messen basierend auf einer Evaluierung der Wortauswahl der automatischen Spracherkennungsmaschine.

**2.** Das System, das ein Freisprech-Kommunikationssystem evaluiert, gemäß Anspruch 1, wobei sich die Datenanalyse-Steuervorrichtung (326) in einem Ereignis-gesteuerten Server befindet.

**3.** Das System, das das Freisprech-Kommunikationssystem evaluiert, gemäß Anspruch 1, wobei sich die Datenanalyse-Steuervorrichtung (326) in einem Prozess-gesteuerten Server befindet.

**4.** Das System, das das Freisprech-Kommunikationssystem evaluiert, gemäß Anspruch 3, wobei der Prozess-gesteuerte Server eine Impressionscharakteristik darstellt, die an eine Client-Vorrichtung übertragen wird.

**5.** Das System, das das Freisprech-Kommunikationssystem evaluiert, gemäß Anspruch 4, das weiter eine graphische Benutzerschnittstelle (1002) aufweist, die konfiguriert ist zum Präsentieren der diagnostischen Wortpaare für einen Benutzer und Empfangen der Auswahl der zwei Worte, die der Benutzer meint, gehört zu haben.

**6.** Das System, das das Freisprech-Kommunikationssystem evaluiert, gemäß Anspruch 5, das weiter aufweist eine erste Faltungseinrichtung (402), die mit dem ersten Audio-Datenbank-Server (306) verbunden ist, und eine zweite Faltungseinrichtung (402), die mit dem zweiten Audio-Datenbank-Server (302) verbunden ist.

**7.** Das System, das das Freisprech-Kommunikationssystem evaluiert, gemäß Anspruch 1, wobei die Auswahl eines der diagnostischen Wortpaare basiert auf Stimmhaftigkeit, Nasalität, Unterhaltung, Ernsthaftigkeit oder einem Kompaktheits-Attribut.

**8.** Das System, das das Freisprech-Kommunikationssystem evaluiert, gemäß Anspruch 1, wobei die Auswahl eines der diagnostischen Wortpaare basiert auf Stimmhaftigkeit, Nasalität, Unterhaltung, Ernsthaftigkeit und einem Kompaktheits-Attribut.

**9.** Das System, das das Freisprech-Kommunikationssystem evaluiert, gemäß Anspruch 1, das weiter aufweist einen Energiepegel-Detektor, der Endpunkte des ausgewählten der diagnostischen Wortpaare misst.

**10.** Das System, das das Freisprech-Kommunikationssystem evaluiert, gemäß Anspruch 1, wobei die Datenanalyse-Steuervorrichtung (326) entfernt von der automatischen Spracherkennungsmaschine weiter konfiguriert ist zum Messen des Pegels einer Verständlichkeit eines Freisprechsystems basierend auf einer Evaluierung der Wortauswahl der automatischen Spracherkennungsmaschine und einer Wortauswahl eines Benutzers, die über eine Benutzerschnittstelle (1002) empfangen wird.

**Revendications**

**1.** Système conçu pour évaluer un système de communication à mains libres, comprenant :

un premier serveur de base de données audio (306) qui stocke des segments de voix artificielle ou de parole, voisés et/ou non voisés, destinés à être reproduits par un haut-parleur (310) ;
un détecteur de parole (304) configuré pour déterminer l'instant auquel émettre une trame du segment de voix artificielle ou de parole, voisé et/ou non voisé ;
un synchronisateur configuré pour synchroniser une sortie du haut-parleur afin qu'elle se superpose au moins partiellement avec une sortie d'un second serveur de base de données audio (302) qui accède à des paires de mots de diagnostic ;
un synthétiseur de bruit à bande étroite (312) configuré pour produire et émettre des signaux de bruit périodiques et/ou non périodiques en même temps que la sortie du haut-parleur ;
un mélangeur (314) qui reçoit et mélange la sortie du haut-parleur, une représentation audible des paires de mots de diagnostic et une sortie du synthétiseur de bruit à bande étroite ;
un moteur de reconnaissance automatique de la parole (324) qui communique avec le mélangeur et qui est programmé pour sélectionner l'une des paires de mots de diagnostic ; et
un contrôleur d'analyse de données (326), implanté à distance du moteur de reconnaissance automatique de la parole et configuré pour mesurer un niveau d'intelligibilité du système à mains libres, en fonction d'une évaluation des sélections de mots par le moteur de reconnaissance automatique de la parole.

**2.** Système évaluant un système de communication à mains libres selon la revendication 1, dans lequel le contrôleur d'analyse de données (326) est résident sur un serveur commandé par les événements.

**3.** Système évaluant un système de communication à mains libres selon la revendication 1, dans lequel le contrôleur d'analyse de données (326) est résident sur un serveur commandé par les processus.

**4.** Système évaluant un système de communication à mains libres selon la revendication 3, dans lequel le serveur commandé par les processus rend une caractéristique d'impression qui est transmise à un dispositif client.

**5.** Système évaluant un système de communication à mains libres selon la revendication 4, comprenant en outre une interface utilisateur graphique (1002) configurée pour présenter les paires de mots de diagnostic à un utilisateur et pour recevoir la sélection des deux mots que l'utilisateur croit avoir entendus.

**6.** Système évaluant un système de communication à mains libres selon la revendication 5, comprenant en outre un premier convoluteur (402) interfacé avec le premier serveur de base de données audio (306) et un second convoluteur (402) interfacé avec le second serveur de base de données audio (302).

**7.** Système évaluant un système de communication à mains libres selon la revendication 1, dans lequel la sélection d'une des paires de mots de diagnostic est fondée sur le voisement, la nasalité, le caractère soutenu, la gravité ou la compacité.

**8.** Système évaluant un système de communication à mains libres selon la revendication 1, dans lequel la sélection d'une des paires de mots de diagnostic est fondée sur le voisement, la nasalité, le caractère soutenu, la gravité ou la compacité.

**9.** Système évaluant un système de communication à mains libres selon la revendication 1, comprenant en outre un détecteur de niveau d'énergie qui mesure les points d'extrémité de la paire sélectionnée parmi les paires de mots de diagnostic.

**10.** Système évaluant un système de communication à mains libres selon la revendication 1, dans lequel le contrôleur d'analyse de données (326), implanté à distance du moteur de reconnaissance automatique de la parole, est en outre configuré pour mesurer le niveau d'intelligibilité d'un système à mains libres en fonction d'une évaluation des sélections de mots du moteur de reconnaissance automatique de la parole et d'une sélection de mots par l'utilisateur, reçue sur une interface utilisateur (1002).

100

Far Side

Near Side
e.g. In Car

Measurement System

112

106

AEC

Echo
Components

104

Rhyme
Words

102

108

Artificial Mouth
Near Side
( Local Talker)

110

ASR

NR/
Res Echo
Suppressor

Σ

FIGURE 1

EP 2 257 034 B1

"mitt"    "bit"    "fit"

Local
Talker
Signal

Time

Far Side
Talker
Signal

Time

# FIGURE 2

FIGURE 3

FIGURE 4

EP 2 257 034 B1

328

304

DRT/DALT words

Voice detection

Voice start point

Voice end point

# FIGURE 5

**FIGURE 6**

FIGURE 7

FIGURE 8

EP 2 257 034 B1

902

904

906

Median
Mean

**FIGURE 9**

FIGURE 10

FIGURE 11

FIGURE 12

1300

Rear Storage Area

Additional Rear Seat

Rear Seat

Door

Door

1214

Driver Seat 1302

Passenger Seat 1304

Door

Door

Dash

1210

1212

1202

FIGURE 13

FIGURE 14

FIGURE 15

FIGURE 16

EP 2 257 034 B1

---- Voiced Buffers

········ Above Background Buffers

--- EndPointed Buffers

1614

1618

1616

160
120
80
40
0

FIGURE 17

Voiced
.... Buffers

Above
····· Background
Buffers

__ EndPointed
Buffers

FIGURE 18

EP 2 257 034 B1

FIGURE 19

FIGURE 20

```
┌─────────────────┐
│  Initialization of │ ─── 2102
│      Global        │
│    Parameters      │
└─────────────────┘
         │
         ▼
┌─────────────────┐
│  Initialization of │ ─── 2104
│       Local        │
│    Parameters      │
└─────────────────┘
         │
         ▼
      To 1402
```

FIGURE 21

FIGURE 22

EP 2 257 034 B1

2300

| S probabilities from previous two frames of audio data | | S probability of current frame of audio data |

Carry out weighted comparison of S Probabilities — 2302

Yes

No

| S present | | no S present |

FIGURE 23

2400

If (no S present) & (previous S present)
& (no recent change to voice thresholds)

2402

Record "current"
voice threshold

track frame
number

Lower voice
thresholds

2404

2406

Check if
S present

Yes

No

Wait until no S present

2414

track frame number

2416

No

Raise voice thresholds
over preset number
of frames

2408

Raise voice thresholds
over preset number
of frames

2418

2410

Is threshold the same
as the "current" threshold

Yes

End

2412

FIGURE 24

(a)

(b)

FIGURE 25

FIGURE 26

FIGURE 27

FIGURE 28

FIGURE 29

FIGURE 30

FIGURE 31

FIGURE 32

EP 2 257 034 B1

3300

3302

NOISE DETECTOR

3304

NOISE
ATTENUATOR

## FIGURE 33

3302

| 3402 | | 3406 | | 3408 |

ANALOG TO DIGITAL
CONVERTER

FAST FOURIER
TRANSFORM

Modeling Logic

WINDOW

3404

FIGURE 34

FIGURE 35

FIGURE 36

EP 2 257 034 B1

FIGURE 37

EP 2 257 034 B1

```
                    ┌─────────────────┐  3802                              ┌─────────────────┐  3814
                    │ DIGITIZE SIGNAL │                                    │ SIGNAL ANALYSIS │
                    └─────────────────┘                                    └─────────────────┘
                             │                                                      │
                             ▼                                                      │
                    ┌─────────────────┐  3804                                       │
                    │    SPECTRUM     │                                             ▼
                    │   CONVERSION    │                                    ┌─────────────────┐  3816
       3808         └─────────────────┘                                    │      NOISE      │
  ┌─────────────┐            │                                             │   ATTENUATION   │
  │  TRANSIENT  │            ▼                                             └─────────────────┘
  │  DETECTION  │──▶┌─────────────────┐                                             │
  └─────────────┘   │BACKGROUND NOISE │  3806                                       ▼
                    │   ESTIMATION    │                                    ┌─────────────────┐  3818
                    └─────────────────┘                                    │     SPEECH      │
                             │                                             │  RECONSTRUCTION │
                             ▼   3810                                      └─────────────────┘
                          ╱────────╲                                                │
                        ╱            ╲                                              │
                      ╱     NOISE      ╲──────────────────────────────────────     │
                      ╲                ╱          YES                               │
                        ╲            ╱                                              │
                          ╲────────╱                                                │
                             │                                                      ▼
                            NO                                            ┌─────────────────┐  3820
                             │                                            │    SPECTRUM     │
                             └────────────────────────────────────────▶  │   CONVERSION    │
                                                                          └─────────────────┘
                                                                                   │
              FIGURE 38                                                            ▼
```

FIGURE 38

VEHICLE

3300 or 3700

SPEECH ENHANCEMENT
LOGIC

FIGURE 39

NETWORK

3300 or 3700

SPEECH ENHANCEMENT
LOGIC

# FIGURE 40

AUDIO SYSTEM &/OR NAVIGATION SYSTEM
&/OR COMMUNICATION SYSTEM ⟋ 3300 or 3700

SPEECH ENHANCEMENT
LOGIC

# FIGURE 41

## REFERENCES CITED IN THE DESCRIPTION

### Patent documents cited in the description

- EP 1883213 A
- US 20040059572 A
- WO 2007035140 A